(19) Europäisches Patentamt
European Patent Office
Office européen des brevets

(11) **EP 1 757 956 A1**

(12) **EUROPÄISCHE PATENTANMELDUNG**

(43) Veröffentlichungstag:
 **28.02.2007   Patentblatt 2007/09**

(51) Int Cl.:
 ***G01S 17/36*** *(2006.01)*    ***G01S 17/00*** *(2006.01)*

(21) Anmeldenummer: **05107764.2**

(22) Anmeldetag: **24.08.2005**

(84) Benannte Vertragsstaaten:
 **AT BE BG CH CY CZ DE DK EE ES FI FR GB GR HU IE IS IT LI LT LU LV MC NL PL PT RO SE SI SK TR**
 Benannte Erstreckungsstaaten:
 **AL BA HR MK YU**

(71) Anmelder: **Leica Geosystems AG**
 **9435 Heerbrugg (CH)**

(72) Erfinder: **Weilenmann, Jürg Dr.**
 **CH-9443, Widnau (CH)**

(74) Vertreter: **Büchel, Kaminski & Partner**
 **Patentanwälte Est.**
 **Austrasse 79**
 **9490 Vaduz (LI)**

(54) **Mehrzielfähiges Distanzmessverfahren nach dem Phasenmessprinzip**

(57)    In einem Distanzmessverfahren nach dem Phasenmessprinzip mit einem zeitlich getrennten Aussenden von periodischen Signalen und einem Abtasten empfangener Signale zur Erzeugung und gegebenenfalls Speicherung von Abtastwerten, wobei die Signale von Zielen reflektierte und überlagerte Signalanteile aufweisen, werden Distanzen zu den Zielen simultan bestimmt. Hierbei wird ein auf einem mathematischen Signalmodell basierendes statistisches Parameterschätzproblem so gelöst, dass die Zahl der Ziele für mehr als ein Ziel vorgegeben oder grundsätzlich die Zielanzahl durch das Verfahren bestimmt wird und wobei die Ungleichungen $D^- \leq D^k < D^+$ und $1 \leq k \leq K$ Gültigkeit besitzen,

wobei vorgegebene Distanzen $D^- \in \mathbb{R}$ und $D^+ \in \mathbb{R}$ mit $D^- < D^+$ den Messbereich des Distanzmessgerätes festlegen.

EP 1 757 956 A1

**Beschreibung**

Die Erfindung betrifft ein mehrzielfähiges Distanzmessverfahren nach dem Phasenmessprinzip nach dem Oberbegriff des Anspruchs 1 und ein Computerprogrammprodukt.

Im Bereich der berührungslosen Distanzmessung sind verschiedene Messprinzipien und -verfahren bekannt, die beispielsweise in den Fachbüchern "J. M. Rüeger: Electronic Distance Measurement, 4th Edition; Springer, Berlin, 1996" und "R. Joeckel & M. Stober: Elektronische Entfernungs- und Richtungsmessung, 4. Auflage; Verlag Konrad Wittwer, Stuttgart, 1999" dargestellt sind. Handelsübliche elektrooptische Distanzmessgeräte arbeiten vornehmlich nach dem Prinzip der Phasenmessung oder dem der Impuls-Laufzeitmessung; siehe z.B. Joeckel & Stober, Kapitel 13.

Die Arbeitsweise dieser Geräte besteht darin, modulierte elektromagnetische Strahlung, z.B. intensitätsmoduliertes Licht, auf die zu vermessenden Ziele auszusenden und nachfolgend ein oder mehrere Echos von den rückstreuenden Objekten, bei denen es sich idealerweise ausschliesslich um die zu vermessenden Ziele handelt, zu empfangen. Die Signalauswertung der empfangenen Echos ist eine technische Standardaufgabe, für die eine Vielzahl von Lösungen, insbesondere auch unter Verwendung von optischen Systemen, realisiert wurde. In Geodäsie und Bauindustrie haben sich in den letzten Jahren immer mehr Tachymeter durchgesetzt, die mit reflektorlos messenden Distanzmessern ausgerüstet sind.

Die reflektorlose Distanzmessung führt oft zu Situationen, in denen der vom Entfernungsmesser emittierte Messstrahl gleichzeitig mehrere Objekte anstrahlt. Das passiert z.B. bei der Vermessung einer Kante; wird sie angemessen, so trifft ein Teil des Strahls das Objekt mit der Kante, während ein anderer Teil des Strahls ein dahinter liegendes Objekt oder den Boden beleuchtet. Ein weiteres Beispiel ist ein Retroreflektor, der sich in der Nähe eines schwach reflektierenden Zielobjektes befindet und Streulicht in den Empfänger des Distanzmessers leitet. Ähnliches passiert, wenn unbeabsichtigt und oft auch unbemerkt Objekte zwischen dem eigentlichen Messobjekt und dem Instrument angestrahlt werden, beispielsweise bei Distanzmessungen durch Fensterscheiben, Baumgeäst, Drahtzäune oder Drahtgitter hindurch.

In derartigen Mehrfachziel-Situationen liefert ein herkömmlicher Phasenmesser, der eine einzige Distanz ausgibt, zumeist eine Falschmessung, d.h. einen Distanzmesswert, der mit einem Fehler behaftet ist, der weit ausserhalb der spezifizierten Messgenauigkeit liegt. Laufzeitmesser können Mehrfachziel-Situationen leichter erkennen und handhaben, sofern die Ziele so weit voneinander entfernt sind bzw. die Sendeimpulse kurzzeitig genug sind, dass deren Echos detektiert und auseinandergehalten werden können. Zudem haben Laufzeitmesser eine grössere Reichweite, da ihre Pulse eine höhere Intensität aufweisen können als die kontinuierlich gesendeten Signale der Phasenmesser, ohne dass sie dabei Augensicherheits-Vorschriften verletzen.

Trotz dieser beiden Vorteile von Laufzeitmessern sind die meisten gebräuchlichen Tachymeter mit Phasenmessern ausgerüstet, weil sie nur so die geforderte Distanzmessgenauigkeit im mm- oder gar Sub-mm-Bereich mit einem für feldtaugliche Anwendungen vertretbarem Aufwand erreichen können. Die Zuverlässigkeit dieser Geräte würde substanziell erhöht, wenn ihre Phasenmesser mehrzielfähig würden.

Aus der WO 2004/074773 bzw. der EP 1 450 128 ist ein hybrides System zur Ableitung von geodätischen Entfernungsinformationen bekannt, bei dem ein Lichtsignal auf ein oder mehrere Ziele ausgesendet wird. Dabei werden Gerätekomponenten wie Sender und Empfänger zusammen mit den Zielen als ein lineares zeitinvariantes System modelliert, das durch ein Signal angeregt und dessen Systemantwort aufgenommen wird. Im Gegensatz zu reinen Laufzeit- oder Phasenmessern wird die Entfernungsinformation sowohl aus der zeitlichen Verschiebung als auch aus der Signalform der Systemantwort abgeleitet.

Damit stellt sich als ein wesentlicher Nachteil aller bisher bekannten Distanzmessprinzipien die technisch nicht oder nur mit grossem Aufwand in Hybridsystemen realisierte Mehrzielfähigkeit für Phasenmesser heraus, wobei wiederum nur Phasenmesser die für viele Anwendungen erforderliche Genauigkeit mit vertretbarem Aufwand bereitstellen. Ein Hauptgrund für diese Sachlage ist die in Fachkreisen weit verbreitete und beispielsweise in EP 1 450 128 explizit geäusserte Ansicht, reine bzw. ausschliessliche Phasenmesser, also solche, die keine Zeitsignale verwenden, seien grundsätzlich nicht mehrzielfähig.

Die Aufgabe der vorliegenden Erfindung besteht daher in der Bereitstellung eines vereinfachten feldtauglichen Messverfahrens mit hoher Genauigkeit, das mehrzielfähig ist.

Eine weitere Aufgabe der vorliegenden Erfindung besteht in der Bereitstellung eines reinen Phasenmessverfahrens, welches eine inhärente Mehrzielfähigkeit aufweist.

Diese Aufgaben werden erfindungsgemäss durch die Merkmale des Anspruchs 1 bzw. durch die kennzeichnenden Merkmale der abhängigen Ansprüche gelöst oder die Lösungen fortgebildet.

Erfindungsgemäss können die vom Phasenmesser empfangenen Signale so verarbeitet werden, dass gleichzeitig Distanzmessungen zu mehreren Zielen mit der für Phasenmesser charakteristischen hohen Genauigkeit möglich werden, wobei die Anzahl dieser Ziele von vornherein bekannt oder unbekannt sein kann. Letzterenfalls ist es auch Aufgabe der Signalverarbeitung, die Anzahl der simultan vermessenen Ziele zu bestimmen oder gegebenenfalls das Vorhandensein eines vermessbaren Zieles zu verneinen.

Gegenstand der vorliegenden Erfindung ist ein mathematischalgorithmisches Verfahren zur simultanen Messung der Distanzen zu mehreren räumlich getrennten Zielen mittels eines Phasenmessers, wobei dieser exemplarisch als ein elektrooptischer Phasenmesser ausgeführt sein kann. Ein einfaches Beispiel einer derartigen Mehrfachziel-Situation ist die Distanzmessung zu einer Hauswand durch eine Fensterscheibe hindurch, wobei gleichzeitig die Distanzen zur Hauswand und zur Fensterscheibe gemessen werden.

Das Vorurteil der Fachwelt, reine Phasenmesser seien nicht mehrzielfähig, wird dadurch gefördert, dass die Fachliteratur, auch die bereits zitierte, die Phasenmessprinzipien anhand eines einzigen Zieles und zumeist mittels sinusoidaler Messsignale darstellt und sich dabei stark auf die Anschauung stützt.

Erfindungsgemäss wird deshalb ein formaler Problemzugang über ein mathematisches Signalmodell gewählt, das die vom Phasenmesser erzeugten digitalen Signaldaten quantitativ mit den unbekannten Zieldistanzen verknüpft. Die Konstruktion dieses Signalmodells wird nicht von der Anschauung geleitet, sondern durch die logischen Erfordernisse, die sich aus dem Wunsch ergeben, die Zieldistanzen aus den Signaldaten eindeutig und mit vertretbarem Rechenaufwand bestimmen zu können. Die unbekannten Zieldistanzen werden als Parameter dieses Signalmodells interpretiert, die es - zusammen mit allen übrigen unbekannten Modellparametern - "optimal" aus den Signaldaten zu schätzen gilt. Die anstehende Messaufgabe wird also als statistisches Parameterschätzproblem formuliert und gelöst.

Im folgenden wird das der Signalverarbeitung zugrunde gelegte Signalmodell formuliert, erläutert und fortschreitend ergänzt bzw. weiter spezifiziert. Im Rahmen dieses Modells wird die Distanzmessaufgabe als Maximum-Likelihood-Parameterschätzproblem formuliert und dieses erfindungsgemäss dergestalt auf ein Maximierungsproblem reduziert, dass dessen Lösung insbesondere auch eine Online-Signalidentifikation umfasst. Dieses nichtlineare und nicht-konkave Maximierungsproblem kann erfindungsgemäss effizient numerisch gelöst werden.

Die Formulierung, Erläuterung und weitere Bearbeitung des Signalmodells erfordert Standardnotation und -terminologie der angewandten Mathematik und insbesondere der Numerischen Linearen Algebra, wie sie beispielsweise im Standardwerk "G. H. Golub & C. F. Van Loan: Matrix Computations, 3rd Edition; The Johns Hopkins University Press, Baltimore, 1996" verwendet wird. Die in dieser Patentschrift verwendeten mathematischen Symbole und die dazugehörige Terminologie werden nachfolgend erläutert.

Das Symbol $\in$ steht für die mengentheoretische Relation "ist Element von". Allgegenwärtig sind die Mengen

$$\mathbb{Z} \qquad \text{Menge der ganzen Zahlen } \{"\cdots,-2,-1,0,1,2,\cdots\},$$

$$\mathbb{N}_0 := \{n \in \mathbb{Z} \mid n \geq 0\} \qquad \text{Menge der nicht-negativen ganzen Zahlen,}$$

$$\mathbb{N} := \{n \in \mathbb{Z} \mid n > 0\} \qquad \text{Menge der natürlichen Zahlen,}$$

$$\mathbb{Q} := \left\{ \frac{m}{n} \mid m \in \mathbb{Z} \, \& \, n \in \mathbb{N} \right\} \qquad \text{Menge der rationalen Zahlen,}$$

$$\mathbb{R} \qquad \text{Menge der reellen Zahlen,}$$

$$\overline{\mathbb{R}_+} := \{x \in \mathbb{R} \mid x \geq 0\} \qquad \text{Menge der nicht-negativen reellen Zahlen,}$$

$$\mathbb{R}_+ := \{x \in \mathbb{R} \mid x > 0\} \qquad \text{Menge der positiven reellen Zahlen,}$$

$$\mathbb{C} := \{x + i \cdot y \mid x, y \in \mathbb{R}\} \qquad \text{Menge der komplexen Zahlen mit imaginärer Einheit } i, \ i^2 = -1, \text{ in denen die Rechen-}$$

operationen +,-,·,/ und - ausser in $\mathbb{C}$ - die Ordnungsrelationen $<, \leq$ in üblicher Weise definiert sind.

Für $a, b \in \mathbb{R}$ bezeichnen

$$]a, b[ := \{x \in \mathbb{R} \mid a < x < b\} \qquad \text{das offene Intervall mit linkem Rand } \textbf{\textit{a}} \text{ und rechtem Rand } \textbf{\textit{b}},$$

$$]a, b] := \{x \in \mathbb{R} \mid a < x \leq b\} \qquad \text{das links halboffene Intervall mit linkem Rand } \textbf{\textit{a}} \text{ und rechtem Rand } \textbf{\textit{b}},$$

$$[a, b[ := \{x \in \mathbb{R} \mid a \leq x < b\} \qquad \text{das rechts halboffene Intervall mit linkem Rand } \textbf{\textit{a}} \text{ und rechtem Rand } \textbf{\textit{b}},$$

$$[a, b] := \{x \in \mathbb{R} \mid a \leq x \leq b\} \qquad \text{das abgeschlossene Intervall mit linkem Rand } \textbf{\textit{a}} \text{ und rechtem Rand } \textbf{\textit{b}}.$$

Für $x \in \mathbb{R}$ ist $\lceil x \rceil := min\{n \in \mathbb{Z} \mid n \geq x\} \in \mathbb{Z}$, $\lfloor x \rfloor := max\{n \in \mathbb{Z} \mid n \leq x\} \in \mathbb{Z}$, und $\langle x \rangle \in \left[ -\frac{1}{2}, \frac{1}{2} \right[$ die

(einzige) reelle Zahl, für die rd($x$):=$x$-$\langle x \rangle \in \mathbb{Z}$ ist. Für $z = x+i\cdot y \in \mathbb{C}$ bezeichnet $\bar{z} := x-i\cdot y \in \mathbb{C}$ die zu $z$ konjugiertkomplexe Zahl, $\mathrm{Re}\{z\} := x = \dfrac{z + \bar{z}}{2} \in \mathbb{R}$ den Realteil von z, $\mathrm{Im}\{z\} := y = \dfrac{z - \bar{z}}{2 \cdot i} \in \mathbb{R}$ den Imaginärteil von

$z$, $\left| z \right| := \sqrt{\bar{z} \cdot z} = \sqrt{x^2 + y^2} \in \overline{\mathbb{R}_+}$ den Betrag von **z** und **arg(z)** das Argument von **z**, d.h. die (im Fall $z \neq 0$ eindeutig

bestimmte) reelle Zahl **arg(z)** $\in$ [-π,π[, für die $z = |z| \cdot e^{i \cdot arg(z)}$ gilt.

Für die Menge $\mathbb{M}$ und **m,n** $\in$ $\mathbb{N}$ bezeichnet $\mathbb{M}^{m \times n}$ die Menge der **m×n**-Matrizen

$$M := \begin{bmatrix} \mu_1^1 & \cdots & \mu_n^1 \\ \vdots & \ddots & \vdots \\ \mu_1^m & \cdots & \mu_n^m \end{bmatrix} \text{ mit } \mu_j^i \in \mathbb{M} , \quad \begin{matrix} 1 \leq i \leq m \\ 1 \leq j \leq n \end{matrix} . \text{ Für } M \in \mathbb{M}^{m \times n} \text{ bezeichnet}$$

$$M^T := \begin{bmatrix} \mu_1^1 & \cdots & \mu_1^m \\ \vdots & \ddots & \vdots \\ \mu_n^1 & \cdots & \mu_n^m \end{bmatrix} \in \mathbb{M}^{n \times m}$$

die zu **M** $\in \mathbb{M}^{m \times n}$ transponierte Matrix. Genügt **M** $\in \mathbb{M}^{m \times n}$ der Gleichung **M$^T$=M,** so heisst **M** symmetrisch, hat **M** $\in$

$\mathbb{M}^{m \times n}$ entlang jeder ihrer Diagonalen identische Elemente, so heisst **M** Toeplitz-Matrix, und hat die Toeplitz-Matrix

**M** $\in$ die spezielle Gestalt $M = \begin{bmatrix} \mu^1 & \mu^m & \cdots & \mu^2 \\ \mu^2 & \mu^1 & \ddots & \vdots \\ \vdots & \ddots & \ddots & \mu^m \\ \mu^m & \cdots & \mu^2 & \mu^1 \end{bmatrix}$, so heisst **M** zirkulante Matrix. Für eine Funktion Φ: $\mathbb{M}$ →

$\mathbb{M}'$ ist

$$\Phi(M) := \begin{bmatrix} \Phi(\mu_1^1) & \cdots & \Phi(\mu_n^1) \\ \vdots & \ddots & \vdots \\ \Phi(\mu_1^m) & \cdots & \Phi(\mu_n^m) \end{bmatrix} \in \mathbb{M}'^{m \times n} ,$$

**M** $\in \mathbb{M}^{m \times n}$; insbesondere ist Φ(**M$^T$**)=[Φ(**M**)]$^T$. Ist $\prec$ eine in $\mathbb{M}$ definierte binäre Relation und **M,M'** $\in \mathbb{M}^{m \times n}$, so

ist **M** $\prec$ **M'** gleichbedeutend mit $\mu_j^i \prec \mu'^i_j$ für alle **1**$\leq$**i**$\leq$**m** & 1$\leq$**j**$\leq$**n**. Anstelle von $\mathbb{M}^{m \times 1}$ wird $\mathbb{M}^m$ geschrieben; $\mathbb{M}^m$
bezeichnet also die Menge der (Spalten-)Vektoren

$$\mu := \begin{bmatrix} \mu^1 \\ \vdots \\ \mu^m \end{bmatrix} \in I\!M^m$$

mit $\mu^i \in I\!M$ für $1 \leq i \leq m$. Für $M \in I\!M^{m \times n}$, $i \in \{1, \cdots, m\]$, $j \in \{1, \cdots, n\}$ bezeichnet $M(i,:) \in I\!M^{1 \times n}$ bzw. $M(:,j) \in I\!M^m$ den $i$-ten Zeilen- bzw. $j$-ten Spaltenvektor von $M$, und

$$M(:) := \begin{bmatrix} M(:,1) \\ \vdots \\ M(:,n) \end{bmatrix} \in I\!M^{m \cdot n}$$

bezeichnet den Vektor, der durch Untereinanderschreiben der Spaltenvektoren von $M \in I\!M^{m \times n}$ entsteht. Für $M \in I\!M^{m \times n}$ und $M' \in I\!M^{m \times n'}$ bezeichnet $[M,M'] \in I\!M^{m \times (n+n')}$ die Matrix mit $[M,M'](:,j) = M(:,j)$ für $1 \leq j \leq n$ und mit $[M, M'](:,j) = M'(:,j-n)$ für $n < j \leq n+n'$; analog wird aus $M \in I\!M^{m \times n}$ und $M' \in I\!M^{m' \times n}$ die Matrix

$$\begin{bmatrix} M \\ M' \end{bmatrix} \in I\!M^{(m+m') \times n}$$

gebildet: $\begin{bmatrix} M \\ M' \end{bmatrix} := [M^T, M'^T]^T$ .

Für $W \in \mathbb{C}^{l \times m}$ und $Z \in \mathbb{C}^{m \times n}$ bezeichnet $W \cdot Z \in \mathbb{C}^{l \times n}$ das übliche Matrixprodukt von $W$ und $Z$, und $Z^H := \bar{Z}^T \in \mathbb{C}^{n \times m}$ ist die zu $Z$ adjungierte Matrix. Für $W, Z \in \mathbb{C}^{m \times n}$ bezeichnet $W \circ Z \in \mathbb{C}^{m \times n}$ das Hadamard- oder elementweise Produkt und $W \div Z \in \mathbb{C}^{m \times n}$ den elementweisen Quotienten ($[W \circ Z]^i_j := [W]^i_j \cdot [Z]^i_j$ und

$$[W \div Z]^i_j := \frac{[W]^i_j}{[Z]^i_j} , \quad \begin{matrix} 1 \leq i \leq m \\ 1 \leq j \leq n \end{matrix}$$ ) der Matrizen $W$ und $Z$, wobei letzterer nur definiert ist, wenn $Z$ kein Matrixelement 0 enthält. Schliesslich bezeichnet für $W \in \mathbb{C}^{k \times l}$ und $Z \in \mathbb{C}^{m \times n}$ $W \otimes Z := \begin{bmatrix} w^1_1 \cdot Z & \cdots & w^1_l \cdot Z \\ \vdots & & \vdots \\ w^k_1 \cdot Z & \cdots & w^k_l \cdot Z \end{bmatrix} \in \mathbb{C}^{k \cdot m \times l \cdot n}$ das

Kronecker-Produkt von $W$ und $Z$. Für $z := \begin{bmatrix} z^1 \\ \vdots \\ z^m \end{bmatrix} \in \mathbb{C}^m$ ist $\mathrm{Diag}(z) := \begin{bmatrix} z^1 & 0 & 0 \\ 0 & \ddots & 0 \\ 0 & 0 & z^m \end{bmatrix} \in \mathbb{C}^{m \times m}$ die

Diagonalmatrix mit Diagonale $z$ und allen übrigen Elementen 0.

Insbesondere bezeichnet den $I\!R^m$ $m$-dimensionalen Euklidischen Vektorraum mit dem Skalarprodukt

$$x^T \cdot y = \sum_{i=1}^m x^i \cdot y^i \in I\!R$$ für $x,y \in I\!R^m$, und $\mathbb{C}^m$ bezeichnet den $m$-dimensionalen unitären Vektorraum mit dem

Skalarprodukt $w^H \cdot z = \sum_{i=1}^{m} \overline{w}^i \cdot z^i \in \mathbb{C}$ für $w,z \in$ ; für $\mathbb{C}^m$ $x \in \mathbb{R}^m$ bzw. $z \in \mathbb{C}^m$ bezeichnet

$\|x\|_2 := \sqrt{x^T \cdot x} \in \overline{\mathbb{R}_+}$ bzw. $\|z\|_2 := \sqrt{z^H \cdot z} \in \overline{\mathbb{R}_+}$ die Euklidische bzw. unitäre Vektornorm im $\mathbb{R}^m$ bzw.

$\mathbb{C}^m$ . Der Vektor $\mathbf{0}_m := \begin{bmatrix} 0 \\ \vdots \\ 0 \end{bmatrix} \in \mathbb{N}_0^m$ bzw. $\mathbf{1}_m := \begin{bmatrix} 1 \\ \vdots \\ 1 \end{bmatrix} \in \mathbb{N}^m$ mit allen Komponenten **0** bzw. **1** wird Nullvektor bzw. Einsvektor genannt. Die Matrix $\mathbf{0}_{m \times n} \in \mathbb{N}_0^{m \times n}$ mit allen Komponenten 0 wird $m \times n$-Nullmatrix und die Matrix

$I_m \in \mathbb{N}^{m \times m}$ mit Diagonalelementen 1 und allen übrigen Elementen 0 wird $m \times m$-Identitätsmatrix genannt.

Für $Z \in \mathbb{K}^{m \times n}$ ( $\mathbb{K} = \mathbb{R}$ oder $\mathbb{K} = \mathbb{C}$ ) bezeichnet $(Z) := \{ w \in \mathbb{K}^m_{\ m} | \ w = Z \cdot z, z \in \mathbb{K}^n \} \subset \mathbb{K}^m$

den Wertebereich von $Z$, $Z^+ \in \mathbb{K}^{n \times m}$ bezeichnet die Moore-Penrose Pseudo-Inverse von $Z$, wie beispielsweise in §III. 1.1 des Buches "G. W. Stewart & J-G. Sun: Matrix Perturbation Theory; Academic Press, Inc., Boston, 1990" erläutert, und $P_Z = Z \cdot Z^+ \in \mathbb{K}^{m \times m}$ bzw.

$$P_Z^{\perp} = I_m - P_Z \in \mathbb{K}^{m \times m}$$

bezeichnen die orthogonalen Projektionen von $\mathbb{K}^m$ auf ( $\mathcal{R}_| Z) \subset \mathbb{K}^m$ bzw. auf das orthogonale Komplement $[(Z)]_|^{\perp} \subset$

$\mathbb{K}^m$ von $\mathcal{R}_|(Z)$ in $\mathbb{K}^m$, wie beispielsweise in §III.1.2 des obengenannten Buches erläutert. Für $Z \in \mathbb{K}^{m \times n}$ bezeichnet

**Rang(Z)** $\in \mathbb{N}_0$ den Rang von $Z$, d. h. die Dimension des Unterraumes $(Z) \subset \mathbb{K}^m$. Hat $Z \in \mathbb{K}^{m \times m}$ vollen Rang $m$, so ist $Z$ invertierbar, und für ihre Inverse $Z^{-1}$ gilt $Z^+ = Z^{-1}$.

Der Erwartungswert der Zufallsmatrix $Z \in \mathbb{K}^{m \times n}$ ( $\mathbb{K} = \mathbb{R}$ oder $\mathbb{K} = \mathbb{C}$ ) wird mit $\mathbb{E}_{[Z]} \in \mathbb{K}^{m \times n}$ bezeichnet.

Nachfolgend werden die physikalischen Verhältnisse des Signalempfangs eines Phasenmessers mathematisch modelliert.

Die gleichzeitig zu vermessenden $K \in \mathbb{N}$ Ziele, wobei $K$ bekannt oder unbekannt sein kann, in unbekannten

unterschiedlichen Distanzen $D^1, D^2, \cdots, D^K \in \mathbb{R}$ vom Sender/Empfänger werden zeitlich sequentiell mit $N \in \mathbb{N}$ periodischen Signalen bekannter Halbwellenlängen

$$(1-0) \qquad \Lambda^1 > \Lambda^2 > \cdots > \Lambda^N > 0$$

angestrahlt, bei denen es sich um intensitätsmodulierte Licht- oder Infrarotwellen, um Mikro-, Schall- oder Ultraschallwellen oder um andersartige Wellen handeln kann.

Das von einigen oder allen $K$ Zielen reflektierte $n$-te Signal wird vom baulich meist nahe oder unmittelbar neben dem Sender liegenden Empfänger detektiert, elektrisch gewandelt, gefiltert und während $I^n \in \mathbb{N}$ Perioden $M \in \mathbb{N}$ mal pro Periode äquitemporal abgetastet, wobei die je eine Periode auseinander liegenden $I^n$ digitalen Abtastwerte zu

den digitalen Distanzsignaldaten $s_n^m \in \mathbb{R}$ gemittelt werden können, $1 \le m \le M,$ $1 \le n \le N.$

Für stationäre Ziele, deren Positionen, Lagen, Formen und Reflexionseigenschaften bezüglich des Sender/Empfängers während der Messung nicht ändern, sind die Gleichungen

$$(1-1) \qquad s_n^m = a^n + \sum_{k=1}^{K} A_n^k \cdot \Sigma_n\left(\frac{D^k}{\Lambda^n} + y^n + \frac{m-1}{M}\right) + w_n^m \quad, \qquad \begin{array}{l} 1 \le m \le M \\ 1 \le n \le N \end{array},$$

ein zweckdienliches mathematisches Modell der Distanzsignaldaten $s_n^m$, wobei den in (1-1) auftretenden, noch nicht erklärten Symbolen folgende Bedeutung zukommt:

$\Sigma_n$: $\mathbb{R} \to \mathbb{R}$  Signalform des *n*-ten Signals: zweimal stetig differenzierbare periodische Funktion der Periode 1, **1≤*n*≤*N*,**

$y^n \in \left[-\frac{1}{2}, \frac{1}{2}\right[$  Phasenlage des *n*-ten Signals, **1≤*n*≤*N*,**

$A_n^k \in \mathbb{R}_+$  Amplitude des vom *k*-ten Ziel reflektierten *n*-ten Signals, **1≤*k*≤*K*, 1≤*n*≤*N*,**

$a^n \in \mathbb{R}$  Gleichstromanteil des *n*-ten Signals, **1≤*n*≤*N*,**

$w_n^m \in \mathbb{R}$  Rauschanteil von $s_n^m \in \mathbb{R}$, **1≤*m*≤*M*, 1≤*n*≤*N*.**

Aufgabe der Signalverarbeitung ist es, aus den **M·N** Zahlen $s_n^m \in \mathbb{R}$, **1≤*m*≤*M*, 1≤*n*≤*N*,** die unbekannten Distanzen $D^1, \cdots, D^K \in \mathbb{R}$ zu ermitteln. Damit sie dazu befähigt ist, muss sie das "Systemverhalten" kennen, d.h. von den in (1-1) auftretenden Variablen müssen einige als bekannt vorausgesetzt werden. Diesbezügliche Modellhypothesen lassen sich konziser formulieren, wenn die Gleichungen (1-1) als Matrix-Gleichung geschrieben werden. Dazu werden die dimensionslosen Variablen

$$(1-2) \qquad d := \frac{1}{\Lambda^1} \cdot \begin{bmatrix} D^1 \\ \vdots \\ D^K \end{bmatrix} \in \mathbb{R}^K \quad \& \quad \lambda := \begin{bmatrix} 1 \\ \Lambda^1/\Lambda^2 \\ \vdots \\ \Lambda^1/\Lambda^N \end{bmatrix} \overset{(1-0)}{\in} [1, \infty[^N,$$

die Vektoren

$$(1-3) \quad x := \frac{1}{M} \cdot \begin{bmatrix} 0 \\ 1 \\ \vdots \\ M-1 \end{bmatrix} \in [0,1[^M, \quad y := \begin{bmatrix} y^1 \\ \vdots \\ y^N \end{bmatrix} \in \left[-\frac{1}{2}, \frac{1}{2}\right[^N, \quad a := \begin{bmatrix} a^1 \\ \vdots \\ a^N \end{bmatrix} \in \mathbb{R}^N$$

die Matrizen

$$(1-4) \quad A := \begin{bmatrix} A_1^1 & \cdots & A_N^1 \\ \vdots & & \vdots \\ A_1^K & \cdots & A_N^K \end{bmatrix} \in \mathbb{R}_+^{K \times N} \quad \& \quad S := \begin{bmatrix} s_1^1 & \cdots & s_N^1 \\ \vdots & & \vdots \\ s_1^M & \cdots & s_N^M \end{bmatrix}, W := \begin{bmatrix} w_1^1 & \cdots & w_N^1 \\ \vdots & & \vdots \\ w_1^M & \cdots & w_N^M \end{bmatrix} \in \mathbb{R}^{M \times N}$$

sowie die Funktion $\Sigma: \mathbb{R}^{M \times N} \to \mathbb{R}^{M \times N}$,

$$(1-5) \qquad \Sigma(X) := \begin{bmatrix} \Sigma_1(X_1^1) & \cdots & \Sigma_N(X_N^1) \\ \vdots & & \vdots \\ \Sigma_1(X_1^M) & \cdots & \Sigma_N(X_N^M) \end{bmatrix} \in \mathbb{R}^{M \times N}, \quad X \in \mathbb{R}^{M \times N}$$

eingeführt, mittels denen die $M \cdot N$ skalaren Gleichungen (1-1) in der das Messsignal-Modell repräsentierenden Matrix-Gleichung

$$(1-6) \qquad S \underset{(1-2:5)}{\overset{(1-1)}{=}} \mathbf{1}_M \cdot a^T + \sum_{k=1}^{K} [\mathbf{1}_M \cdot A(k,:)] \circ \Sigma(\mathbf{1}_M \cdot [d^k \cdot \lambda + y]^T + x \cdot \mathbf{1}_N^T) + W$$

aufgehen.

Im folgenden werden die Voraussetzungen analysiert, unter denen Gleichung (1-6) für gegebene Distanzsignaldaten $S \in \mathbb{R}^{M \times N}$ nach der primär interessierenden Variablen $d \in \mathbb{R}^K$ aufgelöst werden kann. Modellgemäss sind die Systemkonfigurationsparameter $M, N \in \mathbb{N}$ (und mithin $x \in [0, 1[^M$ und $\lambda \in \mathbb{R}_+^N$ bekannt, während die Parameter $a \in \mathbb{R}^N$, $A \in \mathbb{R}_+^{K \times N}$ und $y \in \left[-\frac{1}{2}, \frac{1}{2}\right[^N$ unbekannt sind. Die Identität

$$(1-7) \qquad d^k \cdot \lambda + y = (d^k + \delta) \cdot \lambda + (y - \delta \cdot \lambda), \quad \delta \in \mathbb{R}, \quad k \in \{1, \cdots, K\},$$

verdeutlicht, dass $d \in \mathbb{R}^K$ unter günstigen Umständen dann eindeutig bestimmbar ist, wenn hinreichende Kenntnis über $y \in \left[-\frac{1}{2}, \frac{1}{2}\right[^N$ vorliegt. Zudem müssen offensichtlich auch die Signalformen $\Sigma_n: \mathbb{R} \to \mathbb{R}$, $1 \leq n \leq N$, zumindest partiell bekannt sein.

Die übliche Art, die erforderliche Kenntnis über $y \in \left[-\frac{1}{2}, \frac{1}{2}\right[^N$ und über $\Sigma: \mathbb{R}^{M \times N} \to \mathbb{R}^{M \times N}$ zu erlangen, also Systemidentifikation zu betreiben, ist folgende: Die $N$ periodischen Signale mit Halbwellenlängen (1-0) werden vor und/oder nach der Distanzmessung über eine geräteinterne Referenzstrecke der Länge $2 \cdot D^0 \in \mathbb{R}$ bzw. via ein

geräteinternes Ziel im Abstand $D^0 \in \mathbb{R}$ vom Sender zum Empfänger geführt, wo sie in gleicher Weise wie die Distanzmesssignale abgetastet und zu digitalen Kalibriersignaldaten $s_{\pm n}^{m} \in \mathbb{R}$ gemittelt werden, $1 \leq m \leq M$, $1 \leq n \leq N$, wobei der Subskript - die Präkalibrierung (vor der Messung) und der Subskript $+$ die Postkalibrierung (nach der Messung) kennzeichnet. Die Kalibriersignaldaten werden deshalb auch gemäss (1-1) bzw. (1-6) modelliert, jedoch mit $K = 1$ und $d = d^0 \in \mathbb{R}$,

$$(1-8) \qquad d^0 := \frac{D^0}{A^1} \in \mathbb{R} \ .$$

Bei uniformer Sendeleistung des Phasenmessers während der gesamten Messung, die modellgemäss vorausgesetzt wird, kann ohne Einschränkung der Allgemeinheit

$$(1-9) \qquad A_- = A_+ := \mathbf{1}_N^T$$

gesetzt werden, sodass die Matrix-Gleichung

$$(1-10) \qquad S_\pm \overset{(1-6)}{\underset{(1-8,9)}{=}} \mathbf{1}_M \cdot a_\pm^T + \sum_{K=1} (\mathbf{1}_M \cdot [d^0 \cdot \lambda + y_\pm]^T + x \cdot \mathbf{1}_N^T) + W_\pm$$

resultiert. Die Festsetzung (1-9) "normiert" die im Messsignal-Modell (1-6) auftretenden Zielamplituden: $A_n^k$ ist die Intensität des vom $k$-ten Ziel reflektierten $n$-ten Signals, $1 \leq k \leq K$, $1 \leq n \leq N$, gemessen in dimensionslosen Vielfachen der Amplitude des internen Zieles.

Die Voraussetzungen 'uniforme Sendeleistung' und 'stationäre Ziele' lassen es geboten erscheinen, die Zielamplituden als für alle Sendesignale gleich zu modellieren, also

$$(1-11) \qquad A = A(:,1) \cdot \mathbf{1}_N^T \in \mathbb{R}_+^{K \times N}$$

zu fordern. Die Praxis zeigt jedoch, dass (1-11) der Realität häufig widerspricht, was plausibel ist, da das Medium, durch das Distanzen gemessen werden, typischerweise die Erdatmosphäre, während der Messung oft instationär ist. Realistischer ist die Annahme, die Zielamplituden unterschiedlicher Distanzmesssignale seien proportional zueinander, die durch die Forderung

$$(1-12) \qquad \text{Rang}(A) = 1$$

ausgedrückt werden kann. Wegen **Rang(A)** $\leq K$ ist (1-12) nur im Mehrzielfall $K > 1$ eine Einschränkung, die in gewissen Situationen unrealistisch ist, etwa dann, wenn das Medium, durch das gemessen wird, hochgradig inhomogen und instationär ist. Die Gleichungen (1-11) und (1-12) sind daher lediglich optionale Ergänzungen des Messsignal-Modells (1-6).

Die Identität (1-7), die auch für $k = 0$ mit $y_\pm$ anstelle von $y$ gilt, zeigt, dass $y_\pm \in \left[-\dfrac{1}{2},\dfrac{1}{2}\right[^{N}$ bestenfalls dann

aus den Kalibriersignaldaten $S_\pm \in I\!\!R^{M \times N}$ bestimmt werden kann, wenn $d^0 \in I\!\!R$ bekannt ist, was modellgemäss vorausgesetzt werden kann, da eine geräteinterne Referenzstrecke bzw. ein geräteinternes Ziel vorrichtungsseitig realisiert und präzise vermessen werden kann. Wird nur eine (Prä- oder Post-) Kalibrierung durchgeführt, so gibt es keine sinnvolle Alternative zur "stationären" Modellhypothese

$$(1\text{-}13) \qquad y = y_- \qquad \texttt{bzw.} \qquad y = y_+,$$

die identische Phasenlagen von Distanz- und Kalibriermesssignalen postuliert. Dieses Postulat stipuliert Driftfreiheit der Empfangselektronik und ist mithin realitätsfern. Werden eine Prä- und eine Postkalibrierung durchgeführt, so kann ein die physikalischen Gegebenheiten realistischer beschreibender instationärer Zusammenhang zwischen den Phasen postuliert werden. Ein einfaches deterministisches Phasendrift-Modell ist die gewöhnliche Differentialgleichung erster Ordnung

$$(1\text{-}14) \qquad \frac{\partial y}{\partial t}(t) = v \circ [y_\infty - y(t)], \quad t \in I\!\!R, \text{ mit } v \in \overline{I\!\!R_+^N} \ \& \ y_\infty \in I\!\!R^N,$$

mit der Lösungsmenge

$$(1\text{-}15) \qquad y(t) \overset{(1\text{-}14)}{=} y_\infty + \eta \circ e^{-tv}, \quad t \in I\!\!R, \quad \eta \in I\!\!R^N,$$

die so interpretiert wird: Die Phasen $y \in I\!\!R^N$ - da die Signale modellgemäss 1-periodische Funktionen sind, kann $y \in \left[-\dfrac{1}{2},\dfrac{1}{2}\right[^{N}$ durch die Spezifikation $y \in I\!\!R^N$ ersetzt werden - wurden, beispielsweise durch Schaltvorgänge, aus ihren modellgemäss unterstellten stationären Gleichgewichtslagen $y_\infty \in I\!\!R^N$ bewegt, in die sie nun mit Geschwindigkeiten zurückkehren, die proportional zu ihren Auslenkungen aus den Gleichgewichtslagen sind, wobei $v \in \overline{I\!\!R_+^N}$ als Proportionalitätsfaktoren eingeführt werden können.

Bezeichnet $\tau_-^n \in I\!\!R_+$ bzw. $\tau_+^n \in I\!\!R_+$ die mittlere Zeit, die zwischen der Präkalibriermessung und der Distanzmessung bzw. zwischen der Distanzmessung und der Postkalibriermessung mit dem $n$-ten Signal verstreicht, $1 \le n \le N$, so ergeben sich aus (1-15) mit Hilfe der Vektoren

$$(1\text{-}16) \qquad \tau_\pm := \begin{bmatrix} \tau_\pm^1 \\ \vdots \\ \tau_\pm^N \end{bmatrix} \in I\!\!R_+^N$$

die Beziehungen

$$(1\text{-}17) \qquad y \overset{(1\text{-}15)}{\approx} y_\infty + \eta \qquad \& \qquad y_\pm \overset{(1\text{-}15)}{\underset{(1.16)}{\approx}} y_\infty + \eta \circ e^{\mp \nu \circ \tau_\pm} \, ,$$

wenn in (1-15) für jede Komponente die Zeit-Skala individuell so gewählt wird, dass jede Distanzmessung zur Zeit 0 stattfindet. Aus (1-17) folgt weiter

$$(1\text{-}18)$$

$$y \overset{(1\text{-}17)}{\approx} y_+ + [\mathbf{1}_N - e^{-\nu \circ \tau_+}] \circ \eta \overset{(1\text{-}17)}{\approx} y_+ + \frac{[\mathbf{1}_N - e^{-\nu \circ \tau_+}] \circ [y_- - y_+]}{e^{\nu \circ \tau_-} - e^{-\nu \circ \tau_+}} = \frac{[\mathbf{1}_N - e^{-\nu \circ \tau_+}] \circ y_- + [e^{\nu \circ \tau_-} - \mathbf{1}_N] \circ y_+}{e^{\nu \circ \tau_-} - e^{-\nu \circ \tau_+}} \, ,$$

wobei im Falle $\boldsymbol{v}^n = \boldsymbol{0}$ die rechte Seite von (1-18) gemäss der L'Hôpital'schen Regel durch den Grenzwert

$$(1\text{-}19)$$

$$\lim_{v^n \downarrow 0} \frac{[1 - e^{-v^n \cdot \tau_+^n}] \cdot y_-^n + [e^{v^n \cdot \tau_-^n} - 1] \cdot y_+^n}{e^{v^n \cdot \tau_-^n} - e^{-v^n \cdot \tau_+^n}} = \lim_{v^n \downarrow 0} \frac{\frac{\partial}{\partial v^n} \left[ [1 - e^{-v^n \cdot \tau_+^n}] \cdot y_-^n + [e^{v^n \cdot \tau_-^n} - 1] \cdot y_+^n \right]}{\frac{\partial}{\partial v^n} [e^{v^n \cdot \tau_-^n} - e^{-v^n \cdot \tau_+^n}]} = \frac{\tau_-^n \cdot y_+^n + \tau_+^n \cdot y_-^n}{\tau_-^n + \tau_+^n}$$

ersetzt wird, $n \in \{1, \cdots, N\}$, und da Kalibriermessungen u.a. dem Zweck dienen, via $y_\pm \in \mathbb{R}^N$ Kenntnis über die Phasenlagen $y \in \mathbb{R}^N$ zu erlangen, impliziert (1-18), dass die Variablen $v, \tau_-, \tau_+ \in \mathbb{R}_+^N$ modellgemäss als bekannt vorausgesetzt werden müssen. Das ist nicht unrealistisch, denn die Zeiten $\tau_\pm \in \mathbb{R}_+^N$ können gemessen werden, und $v \in \overline{\mathbb{R}_+^N}$ kann aus speziellen Messungen ermittelt werden, bei denen anstelle von externen Zielen das interne Ziel vermessen wird, das interne Ziel also dreimal hintereinander vermessen wird.

Aus (1-17) folgt

$$(1\text{-}20) \quad y_\pm \overset{(1\text{-}17)}{\approx} y - [\mathbf{1}_N - e^{\mp \nu \circ \tau_\pm}] \circ \eta = y - \alpha_\pm \circ \eta \quad \text{mit} \quad \alpha_\pm := \mathbf{1}_N - e^{\mp \nu \circ \tau_\pm} \in \mathbb{R}^N \, ,$$

was in (1-10) eingesetzt die ein Kalibriersignal-Modell konstituierenden Matrix-Gleichungen

$$(1\text{-}21) \qquad S_\pm \underset{(1\text{-}20)}{\overset{(1\text{-}10)}{=}} \mathbf{1}_M \cdot a_\pm^T + \Sigma(\mathbf{1}_M \cdot [d^0 \cdot \lambda + y - \alpha_\pm \circ \eta]^T + x \cdot \mathbf{1}_N^T) + W_\pm$$

ergibt.

Die Gleichungen (1-6) und (1-21) sind Bestandteile des (Gesamt-)Signalmodells, das optional durch die Nebenbedingung (1-11) oder (1-12) ergänzt werden kann, und das der Signalverarbeitung zugrunde gelegt wird.

Die modellgemäss vorausgesetzte 1-Periodizität der Funktion $\Sigma\colon \mathbb{R}^{M \times N} \to \mathbb{R}^{M \times N}$ und (1-6) implizieren, dass im Falle $\lambda \in \mathbb{Q}^N$, in dem alle Komponenten von $\lambda$ rationale Zahlen sind, unendlich viele $d \in \mathbb{R}^K$ dieselben Distanzsignaldaten $S \in \mathbb{R}^{M \times N}$ erzeugen. Da $\mathbb{Q}^N$ in $\mathbb{R}^N$ dicht ist, d.h. jeder Vektor in $\mathbb{R}^N$ beliebig genau durch einen Vektor aus $\mathbb{Q}^N$ approximiert werden kann, ist in der Praxis unendlichfache Mehrdeutigkeit bzw. Ambiguität bezüglich $d \in \mathbb{R}^K$ allgegenwärtig; Eindeutigkeit kann nur durch zusätzliche Auflagen erzwungen werden. Üblicherweise wird

$$(1\text{-}22) \qquad d^- \cdot \mathbf{1}_K \leq d < d^+ \cdot \mathbf{1}_K$$

mit vorgegebenen Messbereichsgrenzen $d^- < d^+$ bzw. $D^- \overset{(1\text{-}2)}{=} \Lambda^1 \cdot d^- < D^+ \overset{(1\text{-}2)}{=} \Lambda^1 \cdot d^+$ verlangt, wobei die Schranken $d^\pm \in \mathbb{R}$ bzw. $D^\pm \in \mathbb{R}$ so zu wählen sind, dass Eindeutigkeit garantiert ist.

Schliesslich sind auch die Rauschanteile $W, W_\pm \in \mathbb{R}^{M \times N}$ der Distanz- und Kalibriersignaldaten $S, S_\pm \in \mathbb{R}^{M \times N}$ unbekannt. Damit die Gleichungen (1-6) und (1-21) dennoch nach $d \in \mathbb{R}^K$ "aufgelöst" werden können, muss das statistische Verhalten des Rauschens - zumindest strukturell - bekannt sein.

Deshalb wird $\begin{bmatrix} W_- \\ W \\ W_+ \end{bmatrix} \in \mathbb{R}^{3 \cdot M \times N}$ als Zufallsmatrix mit Wahrscheinlichkeitsdichte $n\colon \mathbb{R}^{3 \cdot M \times N} \to \overline{\mathbb{R}_+}$ modelliert, die - allenfalls bis auf einige sie charakterisierende Parameter - als bekannt vorausgesetzt wird. Die Modellierung des Rauschens als Zufallsmatrix und die Spezifizierung ihrer Wahrscheinlichkeitsdichte $n\colon \mathbb{R}^{3 \cdot M \times N} \to \overline{\mathbb{R}_+}$ ist ein (1-6) und (1-21) ergänzender Bestandteil des Signalmodells.

Die mathematisch einfachste, wegen der Beschränktheit der Distanz- und Kalibriersignaldaten $S, S_\pm \in \mathbb{R}^{M \times N}$ jedoch etwas realitätsferne Modellannahme betreffend $n$ ist Normalverteilung mit

(1-23)

$$\mathbb{E}\left[\begin{bmatrix} W_- \\ W \\ W_+ \end{bmatrix}\right] = \mathbf{O}_{3 \cdot M \times N} \quad \& \quad \mathbb{E}\left[\begin{bmatrix} W_-(:,n) \\ W(:,n) \\ W_+(:,n) \end{bmatrix} \cdot \begin{bmatrix} W_-(:,l) \\ W(:,l) \\ W_+(:,l) \end{bmatrix}^T\right] = \delta_{nl} \cdot \sigma^2 \cdot \begin{bmatrix} C_-^{(n)} & \mathbf{O}_{M \times M} & \mathbf{O}_{M \times M} \\ \mathbf{O}_{M \times M} & C^{(n)} & \mathbf{O}_{M \times M} \\ \mathbf{O}_{M \times M} & \mathbf{O}_{M \times M} & C_+^{(n)} \end{bmatrix}, \ 1 \le n, l \le N,$$

wobei $C^{(n)}, C_\pm^{(n)} \in \mathbb{R}^{M \times M}$ symmetrische positiv-definite Matrizen bezeichnen, die als bekannt vorausgesetzt werden, $1 \le n \le N$, $\delta_{nl} = \mathbf{1}$ ist, falls $n = l$, und $\delta_{nl} = \mathbf{0}$ andernfalls, und $\sigma \in \mathbb{R}_+$ einen unbekannten Skalierungsfaktor bezeichnet. Modellhypothese (1-23) postuliert insbesondere die Unkorreliertheit der Distanz- und Kalibriersignaldaten unterschiedlicher Empfangssignale; sie reflektiert den Sachverhalt, dass Signale unterschiedlicher Halbwellenlängen sowie Distanz- und Kalibriermesssignale zeitlich getrennt gesendet und empfangen werden. Der unbekannte Skalierungsfaktor $\sigma \in \mathbb{R}_+$ macht deutlich, dass lediglich die relativen Rauschverhältnisse, nicht aber die absoluten, als bekannt vorausgesetzt werden. Aus (1-23) ergibt sich die Wahrscheinlichkeitsdichte

(1-24)

$$n(W_-, W, W_+)$$

$$\overset{(1-23)}{=} \frac{\exp\left\{-\frac{1}{2 \cdot \sigma^2} \sum_{n=1}^{N} \left\{ W_-(:,n)^T \cdot [C_-^{(n)}]^{-1} \cdot W_-(:,n) + W(:,n)^T \cdot [C^{(n)}]^{-1} \cdot W(:,n) + W_+(:,n)^T \cdot [C_+^{(n)}]^{-1} \cdot W_+(:,n) \right\}\right\}}{(2 \cdot \pi \cdot \sigma^2)^{\frac{3 \cdot M \cdot N}{2}} \cdot \prod_{n=1}^{N} \sqrt{\det(C_-^{(n)}) \cdot \det(C^{(n)}) \cdot \det(C_+^{(n)})}}$$

die der Signalverarbeitung zugrunde gelegt wird.

Es stellt sich die Frage, wie die Signalmodell-Gleichungen (1-6) und (1-21) nach $d \in \mathbb{R}^K$ [$d^- \cdot \mathbf{1}_K, d^+ \cdot \mathbf{1}_K[ \subset$ "aufgelöst" werden sollen. Ein bewährter Ansatz ist, $d \in [d^- \cdot \mathbf{1}K, d^+ \cdot \mathbf{1}_K[$ - und gezwungenermassen auch $y, \eta \in \mathbb{R}^N$, a, $a_\pm \in \mathbb{R}^N$, $A \in \mathbb{R}_+^{K \times N}$ und die $\Sigma$: $\mathbb{R}^{M \times N} \to \mathbb{R}^{M \times N}$ kennzeichnenden Parameter - im Sinne maximaler Likelihood (ML) zu schätzen, wie beispielsweise im Kapitel 18 des Standardwerks "A. Stuart, J. K. Ord & S. Arnold: Kendalls's Advanced Theory of Statistics, Volume 2A, 6th Edition; Arnold, London, 1999", beschrieben, d.h. ihnen die Werte $\hat{d} \in$ [$d^- \cdot \mathbf{1}_K, d^+ \cdot \mathbf{1}_K[$ etc. zuzuordnen, welche die Wahrscheinlichkeitsdichte $n(W_-, W, W_+)$ maximieren, wenn die Zufallsmatrizen $W, W_\pm \in \mathbb{R}^{M \times N}$ gemäss dem Signalmodell (1-6) und (1-21) durch die Distanz- und Kalibriersignaldaten $S, S_\pm \in \mathbb{R}^{M \times N}$ und die Modellparameter substituiert werden. Da die Kovarianzmatrizen $C^{(n)}, C_\pm^{(n)} \in \mathbb{R}^{M \times M}$, $1 \le n \le N$, - was logisch nicht notwendig, aber praktisch sinnvoll ist - als bekannt vorausgesetzt werden, zeigt ein Standardargument der Schätztheorie, dass diese sog. ML-Schätzwerte $\hat{d} \in [d^- \cdot \mathbf{1}_K, d^+ \cdot \mathbf{1}_K[$, etc. für $d \in [d^- \cdot \mathbf{1}_K, d^+ \cdot \mathbf{1}_K[$, etc. im Falle (1-24) charakterisiert sind als Minimalstelle der Summe

(2-0)

$$\sum_{n=1}^{N}\left[W_-(:,n)^T\cdot[C_-^{(n)}]^{-1}\cdot W_-(:,n)+W(:,n)^T\cdot[C^{(n)}]^{-1}\cdot W(:,n)+W_+(:,n)^T\cdot[C_+^{(n)}]^{-1}\cdot W_+(:,n)\right],$$

in der die Zufallsmatrizen $W, W_\pm \in \mathbb{R}^{M\times N}$ gemäss dem Signalmodell (1-6) und (1-21) durch die Distanz- und Kalibriersignaldaten $S, S_\pm \in \mathbb{R}^{M\times N}$ und die Modellparameter substituiert werden. Insbesondere sind die ML-Schätzwerte unabhängig vom Skalierungsparameter $\sigma \in \mathbb{R}_+$ , was zeigt, dass die ML-Schätzwerte unabhängig vom mittleren Rauschniveau sind, was für deren Güte natürlich nicht zutrifft.

Die vom Signalmodell (1-6) und (1-21) geforderte Kenntnis der Signalformen $\Sigma\colon \mathbb{R}^{M\times N} \to \mathbb{R}^{M\times N}$ motiviert, diese möglichst einfach zu wählen. Herkömmliche (Einziel-) Phasenmesser verwenden typischerweise sinusoidale Signale unterschiedlicher Frequenzen. Diese klassische Wahl ist im Mehrzielfall unzweckmässig; zweckdienlicher sind Summen von sinusoidalen Grundharmonischen und einigen ihrer tiefsten Oberwellen. Praktisch können diese erzeugt werden, indem nicht-sinusoidale periodische Signale, die einen Grossteil ihrer Energie im niedrigfrequenten Teil ihres Spektrums haben, ausgesendet und ihre von den Zielen reflektierten Echos so Tiefpass-gefiltert werden, dass lediglich

die $L \in \mathbb{N}$ niedrigsten Harmonischen ihrer Fourier-Zerlegungen zu den Distanz- und Kalibriersignaldaten beitragen. Für solche Signalformen kann der Ansatz

(3-0)

$$\Sigma_n(t):=\sum_{l=1}^{L}[b_n^l\cdot\cos(2\cdot l\cdot\pi\cdot t)+b_n'^l\cdot\sin(2\cdot l\cdot\pi\cdot t)]=\mathrm{Re}\left\{\sum_{l=1}^{L}B_n^l\cdot e^{2\cdot l\cdot\pi\cdot i\cdot t}\right\}, \quad t\in\mathbb{R}, \quad 1\le n\le N,$$

mit den unbekannten Parametern

(3-1)

$$B:=\begin{bmatrix}B_1^1 & \cdots & B_N^1 \\ \vdots & \ddots & \vdots \\ B_1^L & \cdots & B_N^L\end{bmatrix}\in\mathbb{C}^{L\times N}, \quad B_n^l\overset{(3-0)}{:=}b_n^l-i\cdot b_n'^l, \quad 1\le l\le L \ \& \ \mathrm{Im}\{B_n^1\}:=0, \quad 1\le n\le N,$$

verwendet werden, wobei die Bedingung $\mathrm{Im}\{B(1,:)\}=\mathbf{0}_N^T$ die irrelevanten Translations-Freiheitsgrade der Signalformen $\Sigma_n\colon \mathbb{R} \to \mathbb{R}$ eliminiert, 1≤n≤N.

Den **3·M·N** skalaren Signaldaten $S, S_{\pm} \in \mathbb{R}^{M \times N}$ stehen dann - sofern weder (1-11) noch (1-12) beachtet wird - die **K+(4+K+2·L-1)·N** unbekannten reellen Parameter $d \in \mathbb{R}^{K}$, $y, \eta \in \mathbb{R}^{N}$, $a, a_{\pm} \in \mathbb{R}^{N}$, $A \in \mathbb{R}_{+}^{K \times N}$, $\mathrm{Re}\{B\}, \mathrm{Im}\{B\} \in \mathbb{R}^{L \times N}$ gegenüber, sodass zumindest

$$(3\text{-}2) \qquad 3 \cdot M \cdot N \geq K + (3 + K + 2 \cdot L) \cdot N \quad \mathtt{bzw.} \quad M \geq 1 + \frac{K \cdot (1 + 1/N) + 2 \cdot L}{3}$$

sein sollte. In der Praxis wird die Anzahl **M** der SignalAbtastungen pro Signalperiode viel grösser gewählt als von (3-2) gefordert; zweckdienlich ist die Wahl

$$(3\text{-}3) \qquad K \leq L < \frac{M}{2},$$

die modellgemäss vorausgesetzt werden kann.

Wird nach gängiger Praxis das Rauschen des **n**-ten Empfangskanals als mittelwertfreier stationärer Gaussprozess modelliert, und wird angenommen, was üblicher technischer Praxis entspricht, das **M**-malige äquitemporale Abtasten pro Signalperiode des **n**-ten Empfangssignals erfolge in ununterbrochener zeitlicher Folge während $l^{n} \in \mathbb{N}$ Signalperioden, so zeigt eine wahrscheinlichkeitstheoretische Rechnung, dass die Kovarianzmatrizen $C^{(n)}, C_{\pm}^{(n)} \in \mathbb{R}^{M \times M}$ symmetrische Toeplitz-Matrizen sind, die für genügend kurze Korrelationszeit des Gaussprozesses und für hinreichend grosses $l^{n}$ annähernd und im Limes $l^{n} \to \infty$ sogar exakt zirkulant sind, $1 \leq n \leq N$. Da 1000 eine typische Grössenordnung für $l^{n}$ ist, ist es nicht unrealistisch, die Kovarianzmatrizen $C^{(n)}, C_{\pm}^{(n)} \in \mathbb{R}^{M \times M}$ als ergänzenden Bestandteil des Signalmodells *zirkulant* vorauszusetzen, $1 \leq n \leq N$.

Die zirkulanten Matrizen $Z \in \mathbb{C}^{M \times M}$ sind genau die, welche die diskrete Fourier-Transformation $\mathcal{F}_{M} \in \mathbb{C}^{M \times M}$ in $\mathbb{C}^{M}$, d.h. die komplexwertige unitäre und symmetrische Matrix mit Elementen

$$(3\text{-}4) \qquad \left[\mathcal{F}_{M}\right]_{m'}^{m} := \frac{1}{\sqrt{M}} \cdot e^{-2 \cdot \pi \cdot i \cdot \frac{(m-1) \cdot (m'-1)}{M}} = \frac{1}{\sqrt{M}} \cdot e^{2 \cdot \pi \cdot i \cdot \frac{(m-1) \cdot (M+1-m')}{M}} \in \mathbb{C}, \quad 1 \leq m, m' \leq M,$$

unitär diagonalisiert, d.h. für die $\mathcal{F}_{M} \cdot Z \cdot \mathcal{F}_{M}^{H} \in \mathbb{C}^{M \times M}$ diagonal ist. Dieser Sachverhalt gestattet, die symmetrischen, positiv definit und zirkulant vorausgesetzten Kovarianzmatrizen $C^{(n)}, C_{\pm}^{(n)} \in \mathbb{R}^{M \times M}$ so darzustellen:

(3-5)

$$C^{(n)} = \mathscr{F}_M^H \cdot [\mathrm{Diag}(\sigma_n)]^2 \cdot \mathscr{F}_M, \quad \sigma_n = \begin{bmatrix} \sigma_n^0 \\ \vdots \\ \sigma_n^{M-1} \end{bmatrix} \in \mathbb{R}_+^M$$

$$C_\pm^{(n)} = \mathscr{F}_M^H \cdot [\mathrm{Diag}(\sigma_{\pm n})]^2 \cdot \mathscr{F}_M, \quad \sigma_{\pm n} = \begin{bmatrix} \sigma_{\pm n}^0 \\ \vdots \\ \sigma_{\pm n}^{M-1} \end{bmatrix} \in \mathbb{R}_+^M$$

$$\& \qquad \begin{matrix} \sigma_n^m = \sigma_n^{M-m} \\ \sigma_{\pm n}^m = \sigma_{\pm n}^{M-m} \end{matrix}, \quad \begin{matrix} 1 \le m < M \\ 1 \le n \le N \end{matrix}.$$

Jede der Matrizen $C^{(n)}, C_\pm^{(n)} \in \mathbb{R}^{M\times M}$ kann also durch $\lceil M/2 \rceil$ positive Parameter spezifiziert werden. Es wird sich herausstellen, dass die ML-Schätzwerte lediglich von den **3·L** Parametern $\sigma_{-n}^l, \sigma_n^l, \sigma_{+n}^l \in \mathbb{R}_+$, **1≤l≤L**, abhängen, deren Werte mittels eines geeigneten Rauschidentifikations-Verfahrens in Erfahrung gebracht werden können und deshalb modellgemäss als bekannt vorausgesetzt werden.

Die ML-Schätzung der unbekannten Parameter des Signalmodells aus den Distanz- und Kalibriersignaldaten $S, S_\pm \in \mathbb{R}^{M\times N}$ bzw. die Minimierung von (2-0) ist ein komplexes und äusserst rechenintensives Unterfangen, nicht zuletzt deshalb, weil das Signalmodell zahlreiche Parameter enthält, deren Werte gar nicht interessieren. Es ist deshalb angezeigt, möglichst viele der nicht interessierenden Modellparameter analytisch aus der Minimierung zu eliminieren.

Werden die Gleichungen (1-6), (1-21), (3-0) und (3-5) in die zu minimierende Summe (2-0) eingesetzt, so treten die Matrizen $S, S_\pm \in \mathbb{R}^{M\times N}$ nur noch in den Produkten $\mathscr{F}_M \cdot S, \ \mathscr{F}_M \cdot S_\pm \in \mathbb{C}^{M\times N}$ auf, und es ist zweckdienlich, deren Elemente, soweit sie benötigt werden, in Polarform zu schreiben: Wegen $S, S_\pm \in \mathbb{R}^{M\times N}$ haben $\mathscr{F}_M \cdot S, \ \mathscr{F}_M \cdot S_\pm \in \mathbb{C}^{M\times N}$ die eindeutigen Darstellungen

$$(4\text{-}0) \quad \begin{matrix} [\mathscr{F}_M \cdot S]_n^{1+l} = \sqrt{M} \cdot r_n^l \cdot e^{2\cdot\pi\cdot i\cdot \varphi_n^l} & \text{mit } r_n^l \in \overline{\mathbb{R}_+} \ \& \ \varphi_n^l \in \left[-\frac{1}{2}, \frac{1}{2}\right[ \\ [\mathscr{F}_M \cdot S_\pm]_n^{1+l} = \sqrt{M} \cdot r_{\pm n}^l \cdot e^{2\cdot\pi\cdot i\cdot \varphi_{\pm n}^l} & \text{mit } r_{\pm n}^l \in \overline{\mathbb{R}_+} \ \& \ \varphi_{\pm n}^l \in \left[-\frac{1}{2}, \frac{1}{2}\right[ \end{matrix}, \quad \begin{matrix} 1 \le l \le L \\ 1 \le n \le N \end{matrix}.$$

Unter Zuhilfenahme der Matrizen

$$(4\text{-}1)$$

$$Q, Q_\pm, Q' \in \overline{\mathbb{R}_+}^{L\times N}$$

mit $Q_n^l := \dfrac{r_n^l}{\sigma_n^l}$ , $Q_{\pm n}^l := \dfrac{r_{\pm n}^l \cdot \sigma_n^l}{[\sigma_{\pm n}^l]^2}$ , $Q_n'^l := \dfrac{\sigma_n^l \cdot \sqrt{[\sigma_{-n}^l]^2 + [\sigma_{+n}^l]^2}}{\sigma_{-n}^l \cdot \sigma_{+n}^l}$ , $\begin{array}{l} 1 \le l \le L \\ 1 \le n \le N' \end{array}$

$$(4\text{-}2) \quad \Psi_\pm = \begin{bmatrix} \psi_{\pm 1}^1 & \cdots & \psi_{\pm N}^1 \\ \vdots & \ddots & \vdots \\ \psi_{\pm 1}^L & \cdots & \psi_{\pm N}^L \end{bmatrix} := \begin{bmatrix} \varphi_1^1 & \cdots & \varphi_N^1 \\ \vdots & \ddots & \vdots \\ \varphi_1^L & \cdots & \varphi_N^L \end{bmatrix} - \begin{bmatrix} \varphi_{\pm 1}^1 & \cdots & \varphi_{\pm N}^1 \\ \vdots & \ddots & \vdots \\ \varphi_{\pm 1}^L & \cdots & \varphi_{\pm N}^L \end{bmatrix} \in \,]\!-\!1,1[^{L \times N} ,$$

und der Vektoren

$$(4\text{-}3) \quad \delta := d - d^0 \cdot \mathbf{1}_K \in \mathbb{R}^K \quad \& \quad \begin{bmatrix} \delta^- \\ \delta^+ \end{bmatrix} := \begin{bmatrix} d^- - d^0 \\ d^+ - d^0 \end{bmatrix} \in \mathbb{R}^2 \quad \left( \overset{(1\text{-}22)}{\Rightarrow} \delta^- < \delta^+ \right)$$

$$(4\text{-}4) \quad \beta := -\frac{\alpha_-}{\alpha_+} \overset{(1\text{-}20)}{=} \frac{e^{\nu \circ \tau_-} - \mathbf{1}_N}{\mathbf{1}_N - e^{-\nu \circ \tau_+}} \underset{(1\text{-}16)}{\overset{(1\text{-}14)}{\in}} \mathbb{R}_+^N \quad \& \quad \varsigma := \alpha_+ \circ \eta \overset{(1\text{-}20)}{=} [\mathbf{1}_N - e^{-\nu \circ \tau_+}] \circ \eta \in \mathbb{R}^N ,$$

(ist $\nu^n = 0$, so wird $\beta^n \overset{(4\text{-}4)}{:=} \lim_{\nu^n \downarrow 0} \frac{e^{\nu \circ \tau_-} - \mathbf{1}_N}{\mathbf{1}_N - e^{-\nu \circ \tau_+}} = \lim_{\nu^n \downarrow 0} \frac{\frac{\partial}{\partial \nu^n}[e^{\nu \circ \tau_-} - \mathbf{1}_N]}{\frac{\partial}{\partial \nu^n}[\mathbf{1}_N - e^{-\nu \circ \tau_+}]} = \frac{\tau_-^n}{\tau_+^n} \overset{(1\text{-}16)}{\in} \mathbb{R}_+$ gesetzt, $n \in$

$\{1,\cdots,N\}$), ergibt sich aus (3-0), (3-5) und (4-0) - (4.4), dass die Minimierung von (2-0) äquivalent ist zur Maximierung der gemäss

$$(4\text{-}5) \quad \pounds_{K,L}(\delta,\varsigma,A) := \sum_{n=1}^N \sum_{l=1}^L \frac{\left| Q_{-n}^l \cdot e^{2 \cdot \pi \cdot i \cdot (\psi_{-n}^l + l \cdot \beta^n \cdot \varsigma^n)} + Q_n^l \cdot A(:,n)^T \cdot e^{2 \cdot \pi \cdot i \cdot l \cdot \lambda^n \cdot \delta} + Q_{+n}^l \cdot e^{2 \cdot \pi \cdot i \cdot (\psi_{+n}^l - l \cdot \varsigma^n)} \right|^2}{\left| A(:,n)^T \cdot e^{2 \cdot \pi \cdot i \cdot l \cdot \lambda^n \cdot \delta} \right|^2 + [Q_n'^l]^2}$$

definierten Funktion $\pounds_{K,L} : \mathbb{R}^K \times \mathbb{R}^N \times \mathbb{R}^{K \times N} \to \overline{\mathbb{R}_+}$. Die ML-Schätzwerte $\hat{\delta} \in [\delta^- \cdot \mathbf{1}_K, \delta^+ \cdot \mathbf{1}_K[$, $\hat{\zeta} \in \mathbb{R}^N$ und

$\hat{A} \in \mathbb{R}_+^{K \times N}$ für die unbekannten Modellparameter $\delta \in [\delta^- \cdot \mathbf{1}_K, \delta^+ \cdot \mathbf{1}_K[$, $\zeta \in \mathbb{R}^N$ und $A \in \mathbb{R}_+^{K \times N}$ sind mithin charakterisiert als Maximalstelle $(\hat{\delta}, \hat{\zeta}, \hat{A})$ der Funktion $\pounds_{K,L}$ in $[\delta^- \cdot \mathbf{1}_K, \delta^+ \cdot \mathbf{1}_K[ \times \mathbb{R}^N \times \mathbb{R}_+^{K \times N}$, wobei optional noch Randbedingung (1-11) oder (1-12) beachtet werden kann.

Aus (4-5) ist ersichtlich, dass im Falle $\lambda \in \mathbb{Q}^N$ die Funktion $\pounds_{K,L} : \mathbb{R}^K \times \mathbb{R}^N \times \mathbb{R}^{K \times N} \to \overline{\mathbb{R}_+}$ bezüglich

ihres ersten Argumentes periodisch ist; dies motivierte die Einschränkung (1-22). Aber auch das zweite Argument von

$£_{K,L}$ gibt Anlass zu Unbestimmtheit im ersten Argument, wie am einfachsten Spezialfall $K=L=1$ dargelegt werden kann: Wegen

$$(4-6)\quad e^{2\cdot\pi\cdot i\cdot(\psi_{-n}^1+\beta^n\cdot\varsigma^n)} = e^{2\cdot\pi\cdot i\cdot(\psi_{+n}^1-\varsigma^n)} \quad\Leftrightarrow\quad \psi_{-n}^1+\beta^n\cdot\varsigma^n+\ell = \psi_{+n}^1-\varsigma^n$$

$$\Leftrightarrow\quad \varsigma^n = \hat{\varsigma}_\ell^n := \frac{\psi_{+n}^1-\psi_{-n}^1-\ell}{1+\beta^n}\ ,\quad \ell\in\mathbf{Z}\ ,$$

sind die Zahlen

$$\hat{\varsigma}_\ell^n \in \mathbb{R}\ ,$$

$\ell\in\mathbf{Z}$ , Kandidaten für Maximalstellen von $£_{1,1}$. Da gezeigt werden kann, dass die komplexen Zahlen

$$(4-7)\quad e^{2\cdot\pi\cdot i(\psi_{-n}^1+\beta^n\cdot\hat{\varsigma}_\ell^n)} \overset{(4-6)}{=} e^{2\cdot\pi\cdot i(\psi_{+n}^1-\hat{\varsigma}_\ell^n)} \overset{(4-6)}{=} \exp\left\{2\cdot\pi\cdot i\cdot\left(\frac{\psi_{-n}^1+\beta^n\cdot\psi_{+n}^1}{1+\beta^n}+\frac{\ell}{1+\beta^n}\right)\right\}\ ,\quad \ell\in\mathbf{Z}\ ,$$

auf dem Einheitskreis in der komplexen Ebene $\mathbb{C}$ dicht liegen, falls $\beta^n\in\mathbb{R}_+$ irrational ist, ist also für beliebige $\delta\in$ $[\delta^-,\delta^+[$ und $A_n^1\in\mathbb{R}_+$ das Supremum über $\zeta^n\in\mathbb{R}$ des $n$-ten Summanden von $£_{1,1}$

$$(4-8)\qquad\qquad \frac{[Q_{-n}^1+Q_n^1\cdot A_n^1+Q_{+n}^1]^2}{[A_n^1]^2+[Q_n'^1]^2}$$

- ein Ausdruck, der unabhängig von $\delta$ ist.

Die Schlussfolgerung aus obigem Befund ist, dass das Phasendrift-Modell (1-14) die eindeutige Bestimmbarkeit der Distanzen $\delta\in\mathbb{R}^K$ nicht garantieren kann. Es muss folglich durch ein restriktiveres Modell ersetzt oder weiter eingeschränkt werden. Da das Phasendrift-Modell (1-14) zusammen mit Modellansatz (3-5) die Elimination der Parameter $y\in\left[-\frac{1}{2},\frac{1}{2}\right[^N$ und $\mathbf{B}\in\mathbb{C}^{L\times N}$ aus der Schätzaufgabe und damit eine substanzielle Reduktion der Problemkomplexität ermöglicht hat, wird die zweite Alternative bevorzugt.

Die obige Analyse von (4-5) im Spezialfall $K=L=1$ legt die Ursache der unerwünschten Mehrdeutigkeit frei: Das Phasendrift-Modell (1-14) lässt zu, dass im Zeitraum zwischen Prä- und Postkalibrierung einzelne Phasen beliebig viele Perioden "durchwandern"; mit lediglich zwei Kalibriermessungen können diese aber nicht ermittelt werden. Es ist deshalb sinnvoll,

$$(4-9) \qquad\qquad y_+ - y_- \in \left[\frac{1}{2}\cdot\mathbf{1}_N, \frac{1}{2}\cdot\mathbf{1}_N\right[$$

zu fordern: Zwischen Prä- und Postkalibrierung sollen die Phasendriften so klein sein, dass Phasen-Mehrdeutigkeiten ausgeschlossen sind. Das ist eine Anforderung an die Hardware, die mit nur zwei Kalibriermessungen logisch unverzichtbar ist, sich technisch aber auch realisieren lässt. Wegen

$$(4-10) \qquad y_- - y_+ \overset{(1-20)}{=} [\alpha_+ - \alpha_-]\circ\eta \overset{(4-4)}{=} [\mathbf{1}_N + \beta]\circ\alpha_+ \circ\eta \overset{(4-4)}{=} [\mathbf{1}_N + \beta]\circ\varsigma \; ,$$

und (4-4) ist (4-9) äquivalent mit

$$(4-11) \qquad\qquad \varsigma \in \left[\frac{-\mathbf{1}_N}{2\cdot[\mathbf{1}_N + \beta]}, \frac{\mathbf{1}_N}{2\cdot[\mathbf{1}_N + \beta]}\right[ \; ;$$

die Maximierung von $\pounds_{K,L}$ soll also modellgemäss unter Einhaltung von der Bedingung (4-11) erfolgen.

Die Reduktion der Minimierung von (2-0) auf die Maximierung der gemäss (4-5) definierten Funktion $\pounds_{K,L}: \mathbb{R}^K \times \mathbb{R}^N \times \mathbb{R}^{K\times N} \to \overline{\mathbb{R}_+}$ in der Menge

$$(5-0) \quad \mathcal{B} := [\delta^- \cdot\mathbf{1}_K, \delta^+ \cdot\mathbf{1}_K[\times\left[\frac{-\mathbf{1}_N}{2\cdot[\mathbf{1}_N + \beta]}, \frac{\mathbf{1}_N}{2\cdot[\mathbf{1}_N + \beta]}\right[ \times \mathbb{R}_+^{K\times N} \subset \mathbb{R}^K \times \mathbb{R}^N \times \mathbb{R}^{K\times N}$$

hat den bereits erwähnten Vorteil, dass sie die Parameter $y \in \left[-\frac{1}{2}, \frac{1}{2}\right[^N$ und $\mathbf{B} \in \mathbb{C}^{L\times N}$ eliminiert, welche die Sendesignale gemäss (3-0), (1-6) und (1-21) spezifizieren.

Die Maximierung von $\pounds_{K,L}$ anstelle der Minimierung von (2-0) beinhaltet somit insbesondere eine Online-Identifikation der Sendesignale. Dieser Vorzug wird mit der hohen Nichtlinearität der Funktion $\pounds_{K,L}$ erkauft, die in der Menge viele lokale Maxima hat, was ihre Maximierung erheblich erschwert. Zwar existieren globale numerische Maximierungsverfahren, jedoch würden diese, angewendet auf die hochgradig nicht-konkave Funktion $\pounds_{K,L}$, einen inakzeptablen Rechenaufwand erfordern. Mithin führen praktisch gangbare Wege zur Maximierung von $\pounds_{K,L}$ über iterative Maximierungsverfahren, die ausgehend von einem Startwert $(\hat{\delta}, \hat{\zeta}, \hat{\mathbf{A}}) \in \mathbb{R}^K \times \mathbb{R}^N \times \mathbb{R}^{K\times N}$ zu einer lokalen Maximalstelle $(\hat{\delta}, \hat{\zeta}, \hat{\mathbf{A}}) \in \mathcal{B}$ von $\pounds_{K,L}$ konvergieren, bei der es sich hoffentlich um eine globale Maximalstelle von $\pounds_{K,L}$ in $\mathcal{B}$ handelt. Derartige iterative Maximierungen sind - allerdings nichttriviale - Routineaufgaben der numerischen Optimierung, für die zahlreiche bewährte Algorithmen bereitstehen. Da erste und zweite Ableitungen der gemäss (4-5) definierten Funktion $\pounds_{K,L}$ analytisch berechnet werden können, sind effiziente Verfahren zur iterativen Maximierung von $\pounds_{K,L}$ in $\mathcal{B}$ einsetzbar.

Problematischer ist die Bereitstellung eines Startwertes $(\hat{\delta}, \hat{\zeta}, \hat{\mathbf{A}}) \in \mathbb{R}^K \times \mathbb{R}^N \times \mathbb{R}^{K\times N}$, der nahe bei einer globalen Maximalstelle von $£_{K,L}$ in $\mathcal{B}$ liegt. Letzteres ist erforderlich, da iterative Maximierungsverfahren typischerweise so angelegt sind, dass sie zu einer am nächsten beim Startwert liegenden lokalen Maximalstelle konvergieren. Nachfolgend wird ein Verfahren angegeben, das einen derartigen Startwert berechnet.

Leitidee dieses Verfahrens ist, als Startwert $(\hat{\delta}, \hat{\zeta}, \hat{A}) \in \mathbb{R}^K \times \mathbb{R}^N \times \mathbb{R}^{K \times N}$ einen Näherungswert einer globalen Maximalstelle der gemäss (4-5) definierten Funktion $£_{K,K} : \mathbb{R}^K \times \mathbb{R}^N \times \mathbb{R}^{K \times N} \to \overline{\mathbb{R}_+}$ zu wählen, also **L=K** zu wählen und die optionalen Randbedingungen (1-11) und (1-12) zu ignorieren. Ist **K** unbekannt, so wird **K** zunächst als maximale Anzahl simultan zu vermessender Ziele gewählt. Nachfolgend wird dargelegt, wie unter der Voraussetzung

$$(6-0) \qquad \min_{\substack{1 \le k \le K \\ 1 \le n \le N}} Q_{\pm n}^k > 0 \qquad \& \qquad \min_{1 \le n \le N} \max_{1 \le k \le K} Q_n^k > 0$$

ein solcher Startwert berechnet werden kann. Wie aus (4-0) und (4-1) ersichtlich ist, postuliert Annahme (6-0), dass alle Signale nicht-verschwindende harmonische Anteile der Ordnungen bis und mit **K** enthalten und jedes von den Zielen reflektierte Messsignal mindestens einen nichtverschwindenden harmonischen Anteil der Ordnung $\le$**K** enthält. Dieses Postulat ist mit einer hinreichend grossen Anzahl **N** von Signalen, von denen allenfalls einige von der Signalverarbeitung ausgeschlossen werden, oder mittels adaptiver Wahl der Halbwellenlängen(1-0) technisch leicht zu erfüllen.
Durch geeignete mathematische Umformung des **n**-ten äusseren Summanden

$$(6-1) \quad £_K^n(\delta, \varsigma^n, A(:,n)) := \sum_{k=1}^{K} \frac{\left| Q_{-n}^k \cdot e^{2 \cdot \pi \cdot i \cdot (\psi_{-n}^k + k \cdot \beta^n \cdot \varsigma^n)} + Q_n^k \cdot A(:,n)^T \cdot e^{2 \cdot \pi \cdot i \cdot k \cdot \lambda^n \cdot \delta} + Q_{+n}^k \cdot e^{2 \cdot \pi \cdot i \cdot (\psi_{+n}^k - k \cdot \varsigma^n)} \right|^2}{\left| A(:,n)^T \cdot e^{2 \cdot \pi \cdot i \cdot k \cdot \lambda^n \cdot \delta} \right|^2 + [Q_n'^k]^2},$$

der gemäss (4-5) definierten Funktion $£_{K,K}$ lässt sich zeigen, dass diese Funktion $£_K^n : \mathbb{R}^K \times \mathbb{R} \times \mathbb{R}^K \to \overline{\mathbb{R}_+}$ genau dann ihr Maximum annimmt, wenn $\zeta^n \in \mathbb{R}$ als - wegen (4-11) vorzugsweise betragsmässig kleinste - Maximalstelle $\breve{\varsigma}^n \in \mathbb{R}$ der gemäss

$$(6-2) \qquad \gamma_n(\varsigma^n) := \sum_{k=1}^{K} \frac{Q_{-n}^k \cdot Q_{+n}^k}{[Q_n'^k]^2} \cdot \cos(2 \cdot \pi \cdot [\psi_{+n}^k - \psi_{-n}^k - k \cdot (1 + \beta^n) \cdot \varsigma^n]), \quad \varsigma^n \in \mathbb{R},$$

definierten Funktionen $\gamma_n : \mathbb{R} \to \mathbb{R}$ gewählt wird, $1 \le n \le N,$ und wenn $\lambda^n \cdot \delta \in \mathbb{R}^K$ und $A(:,n) \in \mathbb{R}^K$ Werte $\breve{\varepsilon}_n \in \mathbb{R}^K$ und

$$\breve{A}_n \in \overline{\mathbb{R}_+^K}$$

annehmen, für die

$(6-3)$

$$\breve{A}_n^T \cdot e^{2 \cdot \pi \cdot i \cdot k \cdot \breve{\varepsilon}_n} = \frac{Q_n^k \cdot [Q_n'^k]^2}{Q_{-n}^{\ k} \cdot e^{-2 \cdot \pi \cdot i \cdot (\psi_{-n}^{\ k} + k \cdot \beta^n \cdot \breve{\varsigma}^n)} + Q_{+n}^{\ k} \cdot e^{-2 \cdot \pi \cdot i \cdot (\psi_{+n}^{\ k} - k \cdot \breve{\varsigma}^n)}} \ , \quad 1 \le k \le K \ , \quad 1 \le n \le N \ ,$$

gilt. Dass für jedes $n \in \{1,\cdots,N\}$ die $K$ Gleichungen (6-3) nach $\in \ \mathbb{R}^K$ und

$$\breve{A}_n \in \overline{\mathbb{R}_+^K}$$

aufgelöst werden können, ist ein nichttriviales Resultat, das durch ein Theorem von Constantin Carathéodory, publiziert im Artikel "C. Carathéodory: Über den Variabilitätsbereich der Fourierschen Konstanten von positiven harmonischen Funktionen; Rend. Circ. Mat. Palermo 32 (1911), Seiten 193-217", etabliert wird. Die Darstellung links in (6-3) wird deshalb - für festes $n \in \{1,\cdots,N\}$ - Caratheodory-Darstellung der $K$ komplexen Zahlen rechts in (6-3) genannt. Im Fall $K=1$ ist die linke Seite von (6-3) die Polardarstellung der komplexen Zahl rechts in (6-3); die Caratheodory-Darstellung mehrerer komplexer Zahlen ist also eine Verallgemeinerung der Polardarstellung einer (einzigen) komplexen Zahl.

Der von G. Szegö im §4.1 der Monografie "U. Grenander & G. Szegö: Toeplitz Forms and their Applications; University of alifornia Press, Berkely & Los Angeles, 1958" angegebene konstruktive Beweis des Satzes von Carathéodory zeigt wie die Caratheodory-Darstellung numerisch berechnet werden kann, und er zeigt auch, dass im Fall, in dem - für festes $n \in \{1,\cdots,N\}$ - nicht alle $K$ Zahlen rechts in (6-3) verschwinden und eine gewisse im Laufe der Berechnungen auftretende Matrix vollen Rang $K$ hat,

$$\breve{A}_n \in \mathbb{R}_+^K \ , \text{und } \breve{A}_n \text{ ist eindeutig bestimmt,}$$

$$(6-4) \quad \text{lösen } \breve{\varepsilon}_n, \breve{\varepsilon}_n' \in \mathbb{R}^K \ (6\text{-}3), \text{so ist } \breve{\varepsilon}_n - \breve{\varepsilon}_n' \in \mathbb{Z}^K \ , \qquad , \qquad n \in \{1,\cdots,N\} \ ,$$

$$\langle \breve{\varepsilon}_n \rangle \in \left[ -\frac{1}{2}, \frac{1}{2} \right[ \text{ hat paarweise verschiedene Komponenten,}$$

gilt. Voraussetzung (6-0) und die Spezifikation von $\breve{\varsigma}^n \in \ \mathbb{R}$ als Maximalstelle von (6-2) garantieren, dass für jedes $n \in \{1,\cdots,N\}$ alle Nenner und mindestens ein Zähler der $K$ Zahlen rechts in (6-3) von Null verschieden sind, wodurch eine notwendige Voraussetzung für die Gültigkeit von (6-4) erfüllt ist. Da für jedes $n \in \{1,\cdots N\}$ als Bestandteil der numerischen Berechnung der Carathéodory-Darstellung über den Rang besagter Matrix entschieden werden muss, wird für jedes $n \in \{1,\cdots,N\}$ entschieden, ob (6-4) zutrifft oder nicht. Wird für die meisten Signale Vollrangigkeit festgestellt, so können die übrigen Signale von der ML-Schätzung bzw. Signalverarbeitung ausgeschlossen werden, andernfalls kann $K$ reduziert werden, sodass der erste Fall eintritt. Es kann also stets eine Situation herbeigeführt werden, in der (6-4) gilt, was fortan vorausgesetzt wird.

Werden die Maximalstellen von (6-2) und die Caratheodory-Darstellungen (6-3) im Vektor bzw. in den Matrizen

(6-5)

$$\breve{\varsigma} := \begin{bmatrix} \breve{\varsigma}^1 \\ \vdots \\ \breve{\varsigma}^N \end{bmatrix} \in \mathbb{R}^N , \quad \breve{E} := \begin{bmatrix} \breve{\varepsilon}_1^1 & \cdots & \breve{\varepsilon}_N^1 \\ \vdots & & \vdots \\ \breve{\varepsilon}_1^K & \cdots & \breve{\varepsilon}_N^K \end{bmatrix} \overset{(6-4)}{\in} \left[ -\frac{1}{2}, \frac{1}{2} \right[^{K \times N} , \quad \breve{A} := \begin{bmatrix} \breve{A}_1^1 & \cdots & \breve{A}_N^1 \\ \vdots & & \vdots \\ \breve{A}_1^K & \cdots & \breve{A}_N^K \end{bmatrix} \overset{(6-4)}{\in} \mathbb{R}_+^{K \times N}$$

zusammengefasst, so folgt aus den obigen Ausführungen, dass die gemäss

$$(6-6) \qquad \pounds_K(\varDelta, \varsigma, A) \overset{(6-1)}{:=} \sum_{n=1}^N \pounds_K^n (\varDelta(:,n), \varsigma^n, A(:,n)) , \quad \varDelta, A \in \mathbb{R}^{K \times N} , \quad \varsigma \in \mathbb{R}^N ,$$

definierte Funktion $\pounds_K : \mathbb{R}^{K \times N} \times \mathbb{R}^N \times \mathbb{R}^{K \times N} \to \overline{\mathbb{R}_+}$ für jede ganzzahlige Matrix $E \in \mathbb{Z}^{K \times N}$ und beliebige Permutationsmatrizen $J_n \in \{0,1\}^{K \times K}$, $n \in \{2, \cdots, N\}$, in

(6-7)

$$\left( \left[ \frac{E + \breve{E}}{\lambda^1}(:,1), J_2^T \cdot \frac{E + \breve{E}}{\lambda^2}(:,2), \cdots, J_N^T \cdot \frac{E + \breve{E}}{\lambda^N}(:,N) \right], \breve{\varsigma}, [\breve{A}(:,1), J_2^T \cdot \breve{A}(:,2), \cdots, J_N^T \cdot \breve{A}(:,N)] \right)$$

ihr Maximum annimmt. Da definitionsgemäss

$$(6-8) \quad \pounds_{K,K}(\delta, \varsigma, A) \overset{\substack{(4-5) \\ (6-1) \\ (6-6)}}{=} \pounds_K(\delta \cdot \mathbf{1}_N^T, \varsigma, A) , \quad \delta \in \mathbb{R}^K , \quad \varsigma \in \mathbb{R}^N , \quad A \in \mathbb{R}^{K \times N} ,$$

gilt, ist also Maximierung von $\pounds_{K,K}$ äquivalent mit Minimierung der Differenz

$$(6-9) \quad \pounds_K\left( \left[ \frac{E + \breve{E}}{\lambda^1}(:,1), \cdots, J_N^T \cdot \frac{E + \breve{E}}{\lambda^N}(:,N) \right], \breve{\varsigma}, [\breve{A}(:,1), \cdots, J_N^T \cdot \breve{A}(:,N)] \right) - \pounds_K(\delta \cdot \mathbf{1}_N^T, \varsigma, A)$$

für $(\delta, \zeta, A) \in \mathbb{R}^K \times \mathbb{R}^N \times \mathbb{R}^{K \times N}$ und für beliebige Matrizen $E \in \mathbb{Z}^{K \times N}$ und Permutationsmatrizen $J_n \in \{0,1\}^{K \times K}$, $n \in \{2, \cdots, N\}$.

Die gemäss (6-6) definierte Funktion $\pounds_K : \mathbb{R}^{K \times N} \times \mathbb{R}^N \times \mathbb{R}^{K \times N} \to \overline{\mathbb{R}_+}$ ist beliebig oft differenzierbar, und ihre ersten beiden Ableitungen

(6-10)

$$\pounds'_K(\Delta,\varsigma,A):=\frac{\partial \pounds_K}{\partial\begin{bmatrix}\Delta(:)\\\varsigma\\A(:)\end{bmatrix}}(\Delta,\varsigma,A)\in \mathbb{R}^{1\times(2\cdot K+1)\cdot N} \quad \& \quad \pounds''_K(\Delta,\varsigma,A):=\frac{\partial[\pounds'_K]^T}{\partial\begin{bmatrix}\Delta(:)\\\varsigma\\A(:)\end{bmatrix}}(\Delta,\varsigma,A)\in \mathbb{R}^{(2\cdot K+1)\cdot N\times(2\cdot K+1)\cdot N}$$

können analytisch berechnet werden. Bekannte Sätze der mathematischen Analysis besagen, dass $\pounds'_K$ bzw. die sog. Hessematrix $\pounds''_K$ evaluiert an den Maximalstellen (6-7) verschwindet bzw. symmetrisch und negativ semidefinit ist; zudem ist $\pounds''_K$ in den Maximalstellen (6-7) unabhängig von $E \in \mathbb{Z}^{K\times N}$. Wird die Funktion rechts in (6-9) durch ihre Taylorreihe zweiter Ordnung um die Maximalstelle von $\pounds_K$ links in (6-9) ersetzt, so resultiert folgende quadratische Approximation der zu minimierenden Differenz (6-9):

$$(6\text{-}11) \qquad \begin{bmatrix} \boldsymbol{J}\cdot[\lambda\otimes\delta]-[E+\breve{E}](:)\\ \varsigma-\breve{\varsigma}\\ \boldsymbol{J}\cdot A(:)-\breve{A}(:) \end{bmatrix}^T \cdot \mathcal{L} \cdot \begin{bmatrix} \boldsymbol{J}\cdot[\lambda\otimes\delta]-[E+\breve{E}](:)\\ \varsigma-\breve{\varsigma}\\ \boldsymbol{J}\cdot A(:)-\breve{A}(:) \end{bmatrix},$$

mit

$$(6\text{-}12) \quad \mathcal{L}:=\begin{bmatrix}\mathcal{L}_{11} & \mathcal{L}_{21}^T\\ \mathcal{L}_{21} & \mathcal{L}_{22}\end{bmatrix}:=\frac{-1}{2}\cdot\mathrm{Diag}\left(\begin{bmatrix}\lambda\otimes\mathbf{1}_K\\\mathbf{1}_{N+K\cdot N}\end{bmatrix}\right)^{-1}\cdot\pounds''_K\left(\breve{E}\div[\mathbf{1}_K\cdot\lambda^T],\breve{\varsigma},\breve{A}\right)\cdot\mathrm{Diag}\left(\begin{bmatrix}\lambda\otimes\mathbf{1}_K\\\mathbf{1}_{N+K\cdot N}\end{bmatrix}\right)^{-1}$$

$$(\mathcal{L}_{11}\in\mathbb{R}^{K\cdot N\times K\cdot N},\mathcal{L}_{21}\in\mathbb{R}^{(N+K\cdot N)\times K\cdot N},\mathcal{L}_{22}\in\mathbb{R}^{(N+K\cdot N)\times(N+K\cdot N)})$$

und der Blockdiagonalmatrix

$$(6\text{-}13) \qquad \boldsymbol{J}:=\begin{bmatrix} \boldsymbol{I}_K & \mathbf{0}_{K\times K} & \cdots & \mathbf{0}_{K\times K}\\ \mathbf{0}_{K\times K} & J_2 & & \vdots\\ \vdots & & \ddots & \mathbf{0}_{K\times K}\\ \mathbf{0}_{K\times K} & \cdots & \mathbf{0}_{K\times K} & J_N \end{bmatrix}\in\{0,1\}^{K\cdot N\times K\cdot N},$$

mit Permutationsmatrizen $J_n \in \{0,1\}^{K\times K}$ in der Diagonale, $n \in \{2,\cdots,N\}$. Zudem impliziert (6-4) die positive Definitheit der gemäss (6-12) definierten Matrix $\pounds \in \mathbb{R}^{(2\cdot K+1)\cdot N\times(2\cdot K+1)\cdot N}$. Die quadratische Funktion (6-11) wird also nie negativ, und somit kann eine Minimalstelle $\hat{E}\in\mathbb{Z}^{K\times N}$, $\hat{\boldsymbol{J}}\in\{0,1\}^{K\cdot N\times K\cdot N}$, $(\hat{\delta},\hat{\zeta},\hat{\boldsymbol{A}})\in\mathbb{R}^K\times\mathbb{R}^N\times\mathbb{R}^{K\times N}$ von (6-11) berechnet werden; $(\hat{\delta},\hat{\zeta},\hat{\boldsymbol{A}})$ ist dann ein Näherungswert für eine Maximalstelle der gemäss (4-5) definierten Funktion $\pounds_{K,K}$, und er wird als Startwert für die iterative Maximierung von $\pounds_{K,L}$ gewählt.

Der Eingang der Matrix $\boldsymbol{E} \in \boldsymbol{Z}^{K\times N}$ in die Startwertberechnung überrascht nicht: Ihre Komponenten parametrisieren die ganzzahligen Ambiguitäten, die auch für Einziel-Phasenmesser charakteristisch sind und die ihren Ursprung in der Unfähigkeit der Phasenmesser haben, mit einem einzigen Signal Distanzen messen zu können; diese ergeben sich erst rechnerisch aus dem Zusammenspiel mehrerer Messungen mit Signalen unterschiedlicher Halbwellenlängen. Überraschender ist das Auftreten der Permutationsmatrix (6-13), die im Einzielfall ($\boldsymbol{K} = \boldsymbol{1}$) die Identitätsmatrix ist und deshalb bei herkömmlichen Einziel-Phasenmessern nicht in Erscheinung tritt. Sie erscheint, weil zwar jedes Empfangssignal mittels Carathéodory-Darstellung (6-3) entsprechend den Zielen zerlegt werden kann, die Signalanteile aber den Zielen nicht eindeutig zugeordnet werden können; diese Zuordnung kann wiederum nur aus dem Zusammenspiel mehrerer Messungen mit Signalen unterschiedlicher Halbwellenlängen ermittelt werden. Um diese beiden unterschiedlichen Mehrdeutigkeiten auseinanderzuhalten, werden die herkömmlichen, durch $\boldsymbol{E} \in \boldsymbol{Z}^{K\times N}$ parametrisierten Ambiguitäten Distanz-Ambiguitäten genannt, während die neuen, durch $\boldsymbol{J} \in \{0,1\}^{K\cdot N \times K\cdot N}$ parametrisierten Ambiguitäten Zuordnungs-Ambiguitäten genannt werden. Da die von den Carathéodory-Darstellungen (6-3) gelieferten Amplituden

$$\breve{A} \in I\!R_{+}^{K\times N}$$

Masse für die Stärke der Echos der simultan vermessenen Ziele sind, kann in Fällen, wo sich diese Amplituden konsistent und stark voneinander unterscheiden, die Zuordnungs-Ambiguität durch Ordnen dieser Amplituden aufgelöst werden. Trifft dies nicht zu, so kann eine Minimalstelle von (6-11) gefunden werden, indem alle $(\boldsymbol{K!})^{N-1}$ möglichen Zuordnungen durchgerechnet werden.

Die Minimierung der quadratischen Funktion (6-11) führt auf folgendes Resultat:

$$(6-14) \quad \begin{bmatrix} \widehat{\varsigma} \\ \widehat{A}(:) \end{bmatrix} = \begin{bmatrix} \boldsymbol{I}_N & \boldsymbol{O}_{N\times K\cdot N} \\ \boldsymbol{O}_{K\cdot N\times N} & \widehat{\boldsymbol{J}}^T \end{bmatrix} \cdot \left\{ \begin{bmatrix} \breve{\varsigma} \\ \breve{A}(:) \end{bmatrix} - \mathcal{L}_{22}^{-1} \cdot \mathcal{L}_{21} \cdot \left[ \widehat{\boldsymbol{J}} \cdot [\lambda \otimes \widehat{\delta}] - [\widehat{E} + \breve{E}](:) \right] \right\} \in I\!R^{N+K\cdot N}$$

und

$$(6-15) \qquad \widehat{\delta} = \boldsymbol{G}(\widehat{\boldsymbol{J}})^{+} \cdot \boldsymbol{R} \cdot [\widehat{E} + \breve{E}](:) \in I\!R^{K} ,$$

wobei $\boldsymbol{R} \in I\!R^{K\cdot N\times K\cdot N}$ der Rechts-Choleskyfaktor des Schur-Komplements von $\mathcal{L}_{22} \in I\!R^{(N+K\cdot N)\times(N+K\cdot N)}$ in $\mathcal{L}$ $\in I\!R^{(2\cdot K+1)\cdot N\times(2\cdot K+1)\cdot N}$ ist, das die positive Definitheit von erbt, also

$$(6-16)$$

$$\boldsymbol{R}^T \cdot \boldsymbol{R} = \mathcal{L}_{11} - \mathcal{L}_{21}^T \cdot \mathcal{L}_{22}^{-1} \cdot \mathcal{L}_{21} \quad , \, \boldsymbol{R} \in I\!R^{K\cdot N\times K\cdot N} \text{ rechtsdreieck mit } \text{diag}(\boldsymbol{R}) \in I\!R_{+}^{K\cdot N} ,$$

gilt, und

(6-17)

$$\boldsymbol{G}(\boldsymbol{J}) := \boldsymbol{R}\cdot\boldsymbol{J}\cdot[\lambda\otimes\boldsymbol{I}_K] \in \boldsymbol{R}^{K\cdot N\times K}, \text{ mit } \boldsymbol{J} \in \{0,1\}^{K\cdot N\times K\cdot N} \text{ gemäss } (6\text{-}13)$$

ist; die in (6-14) und (6-15) auftretenden Matrizen $\hat{E} \in \boldsymbol{Z}^{K\times N}$ und $\hat{J} \in \{0,1\}^{K\cdot N\times K\cdot N}$ sind die Minimalstellen des Vektornorm-Quadrates

(6-18)

$$\left\| \boldsymbol{P}_{\boldsymbol{G}(\boldsymbol{J})}^{\perp}\cdot\boldsymbol{R}\cdot[E+\breve{E}](:) \right\|_2^2, \quad E \in \boldsymbol{Z}^{K\times N} \text{ und } \boldsymbol{J} \in \{0,1\}^{K\cdot N\times K\cdot N} \text{ gemäss } (6\text{-}13).$$

Wegen der Ganzzahligkeits-Forderung $\boldsymbol{E} \in \boldsymbol{Z}^{K\times N}$ handelt es sich bei der Minimierung von (6-18) - für jede Wahl von $\boldsymbol{J} \in \{0,1\}^{K\cdot N\times K\cdot N}$ gemäss (6-13) - um ein sog. ganzzahliges quadratisches Ausgleichsproblem. Nachfolgend wird dargelegt, wie es erfindungsgemäss effizient gelöst werden kann.

Ganzzahlige Ambiguitäten treten in vielen technischen Systemen auf; das bekannteste Beispiel ist GPS [Global Positioning System]. Aus diesem Anwendungsbereich stammt denn auch ein effizientes Verfahren zur Lösung ganzzahliger quadratischer Ausgleichsprobleme, die sog. *LAMBDA-Methode* [Least Squares Ambiguity Decorrelation Algorithm]; beschrieben ist sie beispielsweise im § 8 des Buches "P. J. G. Teunissen & A. Kleusberg (Eds.): GPS for Geodesy, 2nd Edition; Springer, Berlin, 1998" und im Artikel "P. de Jonge & C. Tiberius: The LAMBDA Method for Integer Ambiguity Estimation: Implementation Aspects; LGR-Series, Publications of the Delft Geodetic Computing Centre, TU Delft, January 1996".

Eine Voraussetzung für die Anwendbarkeit der LAMBDA-Methode oder eines verwandten Verfahrens ist die Vollrangigkeit der Koeffizientenmatrix des Ausgleichsproblems. Gerade diese ist jedoch im Falle (6-18) nicht erfüllt: Aus (6-17), (6-16), (6-13) und (1-2) folgt nämlich

$$(7\text{-}0) \qquad \text{Rang}(\boldsymbol{G}(\boldsymbol{J})) = K, \quad \boldsymbol{J} \in \{0,1\}^{K\cdot N\times K\cdot N} \text{ gemäss } (6\text{-}13),$$

und somit

(7-1)

$$\text{Rang}\left(\boldsymbol{P}_{\boldsymbol{G}(\boldsymbol{J})}^{\perp}\cdot\boldsymbol{R}\right) \overset{(6\text{-}16)}{=} \text{Rang}\left(\boldsymbol{P}_{\boldsymbol{G}(\boldsymbol{J})}^{\perp}\right) \overset{(7\text{-}0)}{=} K\cdot(N-1), \quad \boldsymbol{J} \in \{0,1\}^{K\cdot N\times K\cdot N} \text{ gemäss } (6\text{-}13);$$

die Koeffizientenmatrix $\boldsymbol{P}_{\boldsymbol{G}(\boldsymbol{J})}^{\perp}\cdot\boldsymbol{R} \in \boldsymbol{R}^{K\cdot N\times K\cdot N}$ in (6-18) hat also Rangdefekt $\boldsymbol{K}.$

Effiziente Lösungsverfahren für ganzzahlige quadratische Ausgleichsprobleme sind also nicht direkt auf (6-18) anwendbar, und das dargestellte Verfahren zur Startwertberechnung ist nur dann praxistauglich, wenn der Rangdefekt in (6-18) effizient behoben werden kann. Nachstehend wird ein Verfahren beschrieben, das dies leistet.

Ausgangspunkt dieses Verfahren ist, die Halbwellenlängen (1-0) so zu wählen, dass sie in rationalen Verhältnissen zueinander stehen, sodass also

$$(7\text{-}2) \quad \lambda \in \boldsymbol{Q}^N \quad \left( \overset{(1\text{-}2)}{\underset{(1\text{-}0)}{\Rightarrow}} \ \lambda = \frac{p}{p^1} \text{ mit } p := \begin{bmatrix} p^1 \\ \vdots \\ p^N \end{bmatrix} \in I\!N^N \ \& \ p^1 < p^2 < \cdots < p^N \ \& \ \text{ggT}(p) = 1 \right)$$

gilt, wobei ggT($p$) $\in I\!N$ den grössten gemeinsamen Teiler der Komponenten von $\boldsymbol{p} \in I\!N^N$ bezeichnet.

Weiterer Bestandteil des Verfahrens ist die Wahl einer unimodularen Ergänzung von $p \in I\!N^N$, d.h. einer Matrix $P' \in \boldsymbol{Z}^{N \times (N-1)}$ dergestalt, dass

$$(7\text{-}3) \quad P := [P', p] \in \boldsymbol{Z}_N \ \text{ und mithin } \ Q := P^{-1} = \begin{bmatrix} Q' \\ q^T \end{bmatrix} \in \boldsymbol{Z}_N, \ \begin{matrix} Q' \in \boldsymbol{Z}^{(N-1) \times N} \\ q \in \boldsymbol{Z}^N \end{matrix}$$

ist. In (7-3) bezeichnet $\boldsymbol{Z}_N := \left\{ Z \in \boldsymbol{Z}^{N \times N} \ \middle| \ |\det(Z)| = 1 \right\} \subset \boldsymbol{Z}^{N \times N}$ die Menge der sog. unimodularen $N \times N$-Matrizen, die bezüglich der Matrixmultiplikation eine Gruppe ist; ihre Elemente sind die Automorphismen von $\boldsymbol{Z}^N$. Aus

(7-3) folgt insbesondere $q^T \cdot p \overset{(7\text{-}3)}{=} 1 \overset{(7\text{-}2)}{=} \text{ggT}(p)$; $q \in \boldsymbol{Z}^N$ ist also ein sog. ggT-Koeffizientenvektor für $\boldsymbol{p} \in$

$I\!N^N$, d.h. ggT($\boldsymbol{p}$) lässt sich als Linearkombination der Komponenten von $\boldsymbol{p} \in I\!N^N$ mit Koeffizienten aus $\boldsymbol{q} \in \boldsymbol{Z}^N$ schreiben. Ein Satz der elementaren Zahlentheorie garantiert die Existenz unimodularer Ergänzungen (für $\boldsymbol{N} > \boldsymbol{2}$ gibt es sogar unendlich viele) von Vektoren $\boldsymbol{p} \in I\!N^N$ der Gestalt (7-2), und die numerische Zahlentheorie stellt Algorithmen bereit, die solche effizient berechnen. Beispielsweise kann Algorithm 3 im Artikel "G. Havas, B.S. Majewski & K.R. Matthews: Extended GCD and Hermite Normal Form Algorithms via Lattice Basis Reduction; Experimental Mathematics 7:2 (1998), Seiten 125 - 136", korrigiert in "G. Havas, B.S. Majewski & K.R. Matthews: Extended GCD and Hermite Normal Form Algorithms via Lattice Basis Reduction (addenda and errata); Experimental Mathematics 8:2 (1999), Seite 205", der zu $\boldsymbol{p} \in I\!N^N$ eine (7-3) erfüllende Matrix $\boldsymbol{Q} \in \boldsymbol{Z_N}$ mit betragsmässig kleinen Elementen berechnet, so modifiziert werden, dass er statt $\boldsymbol{Q}$ deren Inverse $\boldsymbol{P} = [\boldsymbol{P'}, \boldsymbol{p}]$ oder beide zusammen erzeugt.

Weiterer Bestandteil des Verfahrens ist die Variablentransformation

$$(7\text{-}4) \quad \begin{bmatrix} -e' \\ e'' \end{bmatrix} := [Q \otimes \boldsymbol{I}_K] \cdot \boldsymbol{J}^T \cdot E(:) \overset{(7\text{-}3)}{\underset{(6\text{-}13)}{\in}} \boldsymbol{Z}^{K \cdot N}, \quad \begin{matrix} e' \in \boldsymbol{Z}^{K \cdot (N-1)} \\ e'' \in \boldsymbol{Z}^K \end{matrix} \quad , \quad E \in \boldsymbol{Z}^{K \times N} \ ,$$

in $\boldsymbol{Z}^{K \cdot N}$; für sie gilt

$$(7-5) \quad E(:) \underset{\substack{(7-3)\\(6-13)}}{\overset{(7-4)}{=}} \boldsymbol{J}\cdot[P\otimes\boldsymbol{I}_K]\cdot\begin{bmatrix}-e'\\e''\end{bmatrix}\overset{(7-3)}{\underset{(7-4)}{=}} \boldsymbol{J}\cdot\{p\otimes e''-[P'\otimes\boldsymbol{I}_K]\cdot e'\}$$

$$\overset{(7-4)}{=} \boldsymbol{J}\cdot\{[p\otimes\boldsymbol{I}_K]\cdot e''-[P'\otimes\boldsymbol{I}_K]\cdot e'\} \overset{(7-2)}{=} \boldsymbol{J}\cdot\{[\lambda\otimes\boldsymbol{I}_K]\cdot(p^1\cdot e'')-[P'\otimes\boldsymbol{I}_K]\cdot e'\}$$

und

$$(7-6) \quad \boldsymbol{P}_{\boldsymbol{G(J)}}^{\perp}\cdot\boldsymbol{R}\cdot\boldsymbol{J}\cdot[p\otimes\boldsymbol{I}_K] \overset{(7-2)}{=} p^1\cdot\boldsymbol{P}_{\boldsymbol{G(J)}}^{\perp}\cdot\boldsymbol{R}\cdot\boldsymbol{J}\cdot[\lambda\otimes\boldsymbol{I}_K] \overset{(6-17)}{=} p^1\cdot\boldsymbol{P}_{\boldsymbol{G(J)}}^{\perp}\cdot\boldsymbol{G(J)} = \boldsymbol{O}_{K\cdot N\times K} \ .$$

Aus (7-5) und (7-6) folgt

$$(7-7) \quad \left\|\boldsymbol{P}_{\boldsymbol{G(J)}}^{\perp}\cdot\boldsymbol{R}\cdot[E+\breve{E}](:)\right\|_2^2 \overset{(7-5)}{\underset{(7-6)}{=}} \left\|\boldsymbol{P}_{\boldsymbol{G(J)}}^{\perp}\cdot\boldsymbol{R}\cdot\left[\boldsymbol{J}\cdot[P'\otimes\boldsymbol{I}_K]\cdot e'-\breve{E}(:)\right]\right\|_2^2 \ ,$$

und aus (7-6), (6-13), (7-3) und (7-1) ergibt sich

$$(7-8)$$

$$\mathrm{Rang}\!\left(\boldsymbol{P}_{\boldsymbol{G(J)}}^{\perp}\cdot\boldsymbol{R}\cdot\boldsymbol{J}\cdot[P'\otimes\boldsymbol{I}_K]\right) \overset{(7-6)}{=} \mathrm{Rang}\!\left(\boldsymbol{P}_{\boldsymbol{G(J)}}^{\perp}\cdot\boldsymbol{R}\cdot\boldsymbol{J}\cdot([P',p]\otimes\boldsymbol{I}_K)\right) \overset{(6-13)}{\underset{(7-3)}{=}} \mathrm{Rang}\!\left(\boldsymbol{P}_{\boldsymbol{G(J)}}^{\perp}\cdot\boldsymbol{R}\right) \overset{(7-1)}{=} K\cdot(N-1) \ .$$

Das Vektornorm-Quadrat rechts in (7-7) hat somit eine vollrangige Koeffizientenmatrix, und seine Minimalstelle $\hat{e}'(\boldsymbol{J}) \in \mathbb{Z}^{K\cdot(N-1)}$ kann für beliebiges $\boldsymbol{J}\in\{0,1\}^{K\cdot N\times K\cdot N}$ effizient berechnet werden, beispielsweise mittels der LAMBDA-Methode oder eines verwandten Verfahrens. Nötigenfalls wird das ganzzahlige quadratische Ausgleichsproblem (7-7) für jede der Permutationsmatrizen (6-13) gelöst; das kleinste dieser $(K!)^{N-1}$ Minima legt dann die Minimalstelle $\left(\hat{\boldsymbol{J}},\hat{e}'(\hat{\boldsymbol{J}})\right) \in \{0,1\}^{K\cdot N\times K\cdot N} \times \mathbb{Z}^{K\cdot(N-1)}$ fest, aus der $\hat{E} \in \mathbb{Z}^{K\times N}$ gemäss (7-5) berechnet wird, wobei $e'' \in \mathbb{Z}^K$ beliebig gewählt werden kann. Dies ergibt

$$(7-9) \quad \hat{\delta} \overset{(6-15)}{\underset{(7-5)}{=}} \boldsymbol{G}(\hat{\boldsymbol{J}})^+\cdot\boldsymbol{R}\cdot\left\{\hat{\boldsymbol{J}}\cdot[\lambda\otimes\boldsymbol{I}_K]\cdot(p^1\cdot e'')-\hat{\boldsymbol{J}}\cdot[P'\otimes\boldsymbol{I}_K]\cdot\hat{e}'+\breve{E}(:)\right\}$$

$$\overset{(6-17)}{=} \boldsymbol{G}(\hat{\boldsymbol{J}})^+\cdot\boldsymbol{G}(\hat{\boldsymbol{J}})\cdot(p^1\cdot e'') + \boldsymbol{G}(\hat{\boldsymbol{J}})^+\cdot\boldsymbol{R}\cdot\left\{\breve{E}(:)-\hat{\boldsymbol{J}}\cdot[P'\otimes\boldsymbol{I}_K]\cdot\hat{e}'\right\}$$

$$\overset{(7-0)}{=} \boldsymbol{G}(\hat{\boldsymbol{J}})^+\cdot\boldsymbol{R}\cdot\left\{\breve{E}(:)-\hat{\boldsymbol{J}}\cdot[P'\otimes\boldsymbol{I}_K]\cdot\hat{e}'\right\} + p^1\cdot e'' \in \mathbb{R}^K \ , \quad e'' \in \mathbb{Z}^K \ ,$$

und

$$(7-10)$$

$$\hat{\boldsymbol{J}}\cdot[\lambda\otimes\hat{\delta}]-[\hat{E}+\breve{E}](:)\underset{(7-5)}{\overset{(7-9)}{=}}\hat{\boldsymbol{J}}\cdot\left\{\lambda\otimes\left[\boldsymbol{G}(\hat{\boldsymbol{J}})^{+}\cdot\boldsymbol{R}\cdot\left\{\breve{E}(:)-\hat{\boldsymbol{J}}\cdot[P'\otimes\boldsymbol{I}_{K}]\cdot\vec{e}'\right\}\right]\right\}+\hat{\boldsymbol{J}}\cdot[P'\otimes\boldsymbol{I}_{K}]\cdot\vec{e}'-\breve{E}(:)$$

$$=\left[\boldsymbol{I}_{K\cdot N}-\hat{\boldsymbol{J}}\cdot[\lambda\otimes(\boldsymbol{G}(\hat{\boldsymbol{J}})^{+}\cdot\boldsymbol{R})]\right]\cdot\left\{\hat{\boldsymbol{J}}\cdot[P'\otimes\boldsymbol{I}_{K}]\cdot\vec{e}'-\breve{E}(:)\right\}\in\mathbb{R}^{K\cdot N}\ .$$

Gleichung (7-9) verdeutlicht die $\boldsymbol{p}^1$-Periodizität des Startwertes $\hat{\delta}\in\mathbb{R}^K$, die eine Folge der $\boldsymbol{p}^1$-Periodizität der gemäss (4-5) definierten Funktion $\pounds_{K,K}$ im Falle (7-2) ist. Die Bereichsgrenzen in (4-3) bzw. (1-22) sind also so zu wählen, dass

$$(7-11)\qquad\qquad \delta^{+}-\delta^{-}\leq p^{1}\quad\text{bzw.}\quad d^{+}-d^{-}\leq p^{1}$$

gilt, was $e''\in\mathbb{Z}^{K}$ in (7-9) eindeutig festlegt. Gleichung (7-10) zeigt, dass die gemäss (6-14) berechneten Startwerte

$(\hat{\zeta},\hat{A})\in\mathbb{R}^{N}\times\mathbb{R}^{K\times N}$ nicht von den Bereichsgrenzen (7-11) abhängen.

Die vorstehend dargestellte Startwertberechnung erfordert einen beträchtlichen Rechenaufwand, und es ist wünschenswert, ein einfacheres Verfahren zur Verfügung zu haben, das allenfalls nur beschränkt anwendbar ist. Ein solches Verfahren wird nachfolgend beschrieben.

Um das Verfahren zu motivieren, wird der Idealfall rauschfreier Empfangssignale betrachtet: Wird

$$(8-0)\qquad\qquad W=\mathbf{0}_{M\times N}=W_{\pm}$$

gesetzt, so sind die Distanz- und Kalibriersignaldaten $\boldsymbol{S},\boldsymbol{S}_{\pm}\in\mathbb{R}^{M\times N}$ durch die modellmässig unterstellten "wahren Werte" der im Signalmodell auftretenden Parameter gemäss (1-6) und (1-21) eindeutig festgelegt. Werden diese "wahren Werte" von $\delta\in[\delta^{-}\cdot\mathbf{1}_{K},\delta^{+}\cdot\mathbf{1}_{K}]$, $\zeta\in\mathbb{R}^{N}$ und $A\in\mathbb{R}_{+}^{K\times N}$ mit $\overline{\delta},\overline{\zeta}$, und $\overline{A}$ bezeichnet, so zeigt eine Analyse der analytischen Reduktion der Minimierung von (2-0) auf die Maximierung von (4-5), dass (8-0) die Identitäten

$$(8-1)\quad \frac{r_n^l}{r_{-n}^l}\cdot e^{2\pi i\cdot(\psi_{-n}^l+l\cdot\beta^n\cdot\overline{\zeta}^n)}=\overline{A}(:,n)^T\cdot e^{2\pi i\cdot l\cdot\lambda^n\cdot\overline{\delta}}=\frac{r_n^l}{r_{+n}^l}\cdot e^{2\pi i\cdot(\psi_{+n}^l-l\overline{\zeta}^n)}\ ,\quad \begin{array}{l}1\leq l\leq L\\ 1\leq n\leq N'\end{array}$$

impliziert, und aus diesen folgt wegen (4-1), dass $(\overline{\delta},\overline{\zeta},\overline{A})$ Maximalstelle der gemäss (4-5) definierten Funktion $\pounds_{K,L}$ ist. Es gilt somit

$$(8-2) \qquad W = \mathbf{0}_{M \times N} = W_{\pm} \;\Rightarrow\; (\hat{\delta}, \hat{\varsigma}, \hat{A}) = (\overline{\delta}, \overline{\varsigma}, \overline{A}) \,,$$

was einem Verhalten entspricht, das von jedem respektablen Schätzer erwartet wird.

Wegen $K \leq L$ folgt aus (6-3), (8-1) und (4-1) auch

$$(8-3) \qquad \breve{A}(:,n)^T \cdot e^{2 \cdot \pi \cdot i \cdot k \cdot \breve{\varepsilon}_n} \underset{\substack{(8-1) \\ (4-1)}}{\overset{(6-3)}{=}} \overline{A}(:,n)^T \cdot e^{2 \cdot \pi \cdot i \cdot k \cdot \lambda^n \cdot \overline{\delta}} \,, \qquad \begin{array}{c} 1 \leq k \leq K \\ 1 \leq n \leq N \end{array} ,$$

und daraus wegen (6-4)

$$(8-4) \qquad \left\langle \lambda^n \cdot \overline{\delta} \right\rangle \underset{(6-4)}{\overset{(8-3)}{=}} \overline{J}_n^T \cdot \breve{E}(:,n) \quad \& \quad \overline{A}(:,n) \underset{(6-4)}{\overset{(8-3)}{=}} \overline{J}_n^T \cdot \breve{A}(:,n) \,, \qquad 1 \leq n \leq N \,,$$

für geeignet gewählte Permutationsmatrizen $\overline{J}_n \in \{0,1\}^{K \times K}$, $1 \leq n \leq N$, und ebenso

$$(8-5) \qquad \cos(2 \cdot \pi \cdot [\psi_{+n}^k - \psi_{-n}^k - k \cdot (1 + \beta^n) \cdot \overline{\varsigma}^n]) \overset{(8-1)}{=} 1 \,, \qquad \begin{array}{c} 1 \leq k \leq K \\ 1 \leq n \leq N \end{array} ,$$

was wegen der Wahl von $\breve{\varsigma}^n \in \mathbb{R}$ als betragsmässig kleinste Maximalstelle der Funktion (6-2) für $n \in \{1, \cdots, N\}$

$$(8-6) \qquad\qquad \breve{\varsigma} = \overline{\varsigma}$$

impliziert.

Die Identitäten (8-4) besagen, dass bei geeignet gewählter Numerierung der Ziele Matrizen $\overline{\overline{E}} \in \mathbb{Z}^{K \times N}$ und $\overline{J} \in \{0,1\}^{K \cdot N \times K \cdot N}$ gemäss (6-13) existieren, für die

$$(8-7) \qquad [\overline{E} + \breve{E}](:) \underset{(6-13)}{\overset{(8-4)}{=}} \overline{J} \cdot [\lambda \otimes \overline{\delta}] \in \mathbb{R}^{K \cdot N} \qquad \& \qquad \breve{A}(:) \underset{(6-13)}{\overset{(8-4)}{=}} \overline{J} \cdot \overline{A}(:) \in \mathbb{R}^{K \cdot N}$$

gilt. Dies impliziert

$(8-8)$

$$P_{\boldsymbol{G}(\overline{\boldsymbol{J}})}^{\perp}\cdot\boldsymbol{R}\cdot[\overline{E}+\breve{E}](:) \overset{(8-7)}{=} P_{\boldsymbol{G}(\overline{\boldsymbol{J}})}^{\perp}\cdot\boldsymbol{R}\cdot\overline{\boldsymbol{J}}\cdot[\lambda\otimes\overline{\delta}] = P_{\boldsymbol{G}(\overline{\boldsymbol{J}})}^{\perp}\cdot\boldsymbol{R}\cdot\overline{\boldsymbol{J}}\cdot[\lambda\otimes\boldsymbol{I}_K]\cdot\overline{\delta} \overset{(6-17)}{=} P_{\boldsymbol{G}(\overline{\boldsymbol{J}})}^{\perp}\cdot\boldsymbol{G}(\overline{\boldsymbol{J}})\cdot\overline{\delta} = \boldsymbol{0}_{K\cdot N} \ ,$$

also kann (6-18) bzw. (7-7) zu Null gemacht werden, was zeigt, dass auch die Minimierung des Vektornorm-Quadrates (7-7) für rauschfreie Signale die "wahren Parameterwerte" $\overline{\delta}\in \mathbb{R}^K$ , $\in \mathbb{R}^N$ , $\overline{A} \in \mathbb{R}_+^{K\times N}$ liefert. Zudem gilt

$$(8.9) \quad \frac{1}{p^1}\cdot\overline{\delta} \overset{(7-3)}{=} \frac{q^T\cdot p}{p^1}\cdot\overline{\delta} \overset{(7-2)}{=} (q^T\cdot\lambda)\cdot\overline{\delta} = [q^T\otimes\boldsymbol{I}_K]\cdot[\lambda\otimes\overline{\delta}] \overset{(8-7)}{\underset{(6-13)}{=}} [q^T\otimes\boldsymbol{I}_K]\cdot\overline{\boldsymbol{J}}^T\cdot[\overline{E}+\breve{E}](:)$$

$$\overset{(7-5)}{\underset{(6-13)}{=}} [q^T\otimes\boldsymbol{I}_K]\cdot\{p\otimes\overline{e}'' - [P'\otimes\boldsymbol{I}_K]\cdot\overline{e}' + \overline{\boldsymbol{J}}^T\cdot\breve{E}(:)\}$$

$$= (q^T\cdot p)\cdot\overline{e}'' - [(q^T\cdot P')\otimes\boldsymbol{I}_K]\cdot\overline{e}' + [q^T\otimes\boldsymbol{I}_K]\cdot\overline{\boldsymbol{J}}^T\cdot\breve{E}(:)$$

$$\overset{(7-3)}{=} \overline{e}'' + [q^T\otimes\boldsymbol{I}_K]\cdot\overline{\boldsymbol{J}}^T\cdot\breve{E}(:) \ ,$$

was wegen $p^1 \in \mathbb{N}$ äquivalent ist mit

$$(8-10) \qquad \overline{\delta} = p^1\cdot\left\{\sum_{n=1}^{N} q^n\cdot\overline{J}_n^T\cdot\breve{E}(:,n) + \overline{e}''\right\} , \quad \overline{e}'' \in \mathbb{Z}^K \ .$$

Die obigen Ausführungen zeigen, dass im Idealfall rauschfreier Signale der ML-Schätzwert $(\hat{\delta},\hat{\zeta},\hat{\boldsymbol{A}})$ via Maximierungen der Funktionen (6-2), via Caratheodory-Darstellungen (6-3) und via Formel (8-10) berechnet werden kann, sofern es gelingt, den ML-Schätzwert $\hat{\boldsymbol{J}} \in \{0,1\}^{K\cdot N\times K\cdot N}$ für die Zuordnungs-Ambiguität in Erfahrung zu bringen. Wie bereits bemerkt, ist dies im Fall **K=1** trivial und im Fall von **K>1** Zielen mit deutlich unterschiedlichen Echo-Stärken leicht möglich; andernfalls kann versucht werden, $\hat{\boldsymbol{J}} \in \{0,1\}^{K\cdot N\times K\cdot N}$ aus Formel (8-10) zu bestimmen, die auf viele verschiedene ggT-Koeffizientenvektoren $q \in \mathbb{Z}^N$ von $p \in \mathbb{N}^N$ angewendet wird.

Die vereinfachte Startwertberechnung besteht nun darin, das eben beschriebene Verfahren auf die realen rauschbehafteten Distanz- und Kalibriersignaldaten $\boldsymbol{S},\boldsymbol{S}_{\pm} \in \mathbb{R}^{M\times N}$ anzuwenden. Dabei tritt an die Stelle der Minimierung von (7-7) die einfachere Berechnung von ggT-Koeffizientenvektoren $q \in \mathbb{Z}^N$ für $p \in \mathbb{N}^N$, die vorzugsweise betragsmässig kleine Komponenten haben, und die in Formel (8-10) verwendet werden. Die Motivierung dieses vereinfachten Verfahrens macht es ratsam, es nur in Situationen rauscharmer Empfangssignale zu verwenden.

**Patentansprüche**

1. Distanzmessverfahren mit

• einem zeitlich getrennten <u>Aussenden</u> von $N \geq 2$ periodischen, insbesondere elektromagnetischen, Signalen mit Halbwellenlängen $\Lambda^1 > \cdots > \Lambda^N > 0$,

• einem <u>Abtasten</u> empfangener Signale mit äquitemporalen Abtastzeitpunkten zur Erzeugung und gegebenenfalls Speicherung von Abtastwerten, wobei die Signale von $K$ Zielen reflektierte und überlagerte Signalanteile aufweisen und das Abtasten pro Signalperiode $M \geq 2$ mal erfolgt,

• einem simultanen <u>Bestimmen</u> von Distanzen $D^1, \cdots, D^K \in \mathbb{R}$ zu den $K$ Zielen aus den Abtastwerten ausschliesslich nach dem Phasenmessprinzip,

**dadurch gekennzeichnet, dass**
beim Bestimmen der Distanzen die Zahl $K$

• für $K \geq 2$ vorgegeben oder
• für $K \geq 0$ aus den Abtastwerten ermittelt

wird und ein auf einem mathematischen Signalmodell basierendes statistisches Parameterschätzproblem so gelöst wird, dass die Ungleichungen $D^- \leq D^k < D^+$ für $1 \leq k \leq K$ gelten, wobei vorgegebene Distanzen $D^- \in \mathbb{R}$ und $D^+ \in \mathbb{R}$ mit $D^- < D^+$ den Messbereich des Distanzmessgerätes festlegen.

2.  Distanzmessverfahren nach Anspruch 1,
    **dadurch gekennzeichnet, dass**

    • jedes der periodischen Signale wenigstens $L \in \mathbb{N}$ nichtverschwindende niedrigstfrequente harmonische Anteile enthält und

    • eine obere Schranke $\bar{K} \in \mathbb{N}$ der simultan zu bestimmenden Zieldistanzen, die Zahl $L$ und die Anzahl $M \in \mathbb{N}$ äquitemporaler Signalabtastungen dergestalt gewählt werden, dass die Ungleichung $\bar{K} \leq L < \dfrac{M}{2}$

    erfüllt ist.

3.  Distanzmessverfahren nach Anspruch 1 oder 2,
    **dadurch gekennzeichnet, dass**

    das Signalmodell Distanzsignaldaten $s_n^m \in \mathbb{R}$ aus den Abtastwerten mit den unbekannten Zieldistanzen gemäss den $M \cdot N$ Gleichungen

    $$s_n^m = a^n + \sum_{k=1}^{K} A_n^k \cdot \Sigma_n \left( \frac{D^k}{\Lambda^n} + y^n + \frac{m-1}{M} \right) + w_n^m, \qquad 1 \leq m \leq M, \quad 1 \leq n \leq N,$$

    verknüpft, die in einer Matrix-Gleichung

    $$S = \mathbf{1}_M \cdot a^T + \sum_{k=1}^{K} [\mathbf{1}_M \cdot A(k,:)] \circ \Sigma (\mathbf{1}_M \cdot [d^k \cdot \lambda + y]^T + x \cdot \mathbf{1}_N^T) + W$$

    mit $S := \begin{bmatrix} s_1^1 & \cdots & s_N^1 \\ \vdots & \ddots & \vdots \\ s_1^M & \cdots & s_N^M \end{bmatrix} \in \mathbb{R}^{M \times N}$ zusammenfassbar sind, wobei

- $\mathbf{1}_M := \begin{bmatrix} 1 \\ \vdots \\ 1 \end{bmatrix} \in \mathbb{N}^M$ einen Vektor mit **M** Komponenten 1 bezeichnet,

- Gleichstromanteile $a^n \in \mathbb{R}$ der Distanzsignaldaten $s_n^m$ im Vektor $a := \begin{bmatrix} a^1 \\ \vdots \\ a^N \end{bmatrix} \in \mathbb{R}^N$ zusammengefasst

sind,
- ein Superskript $^T$ Transposition von damit gekennzeichneten Vektoren bzw. Matrizen anzeigt,

- $A(k,:) \in \mathbb{R}^{1 \times N}$ den **k**-ten Zeilenvektor einer Matrix $A := \begin{bmatrix} A_1^1 & \cdots & A_N^1 \\ \vdots & \ddots & \vdots \\ A_1^K & \cdots & A_N^K \end{bmatrix} \in \mathbb{R}_+^{K \times N}$ bezeichnet, deren Element $A_n^k \in \mathbb{R}_+$ einen Zielamplitude genannten Anteil des vom *k*-ten Ziels reflektierten **n**-ten Signals bezeichnet,
- ein Symbol o die Hadamard- oder elementweise Multiplikation der Matrizen links und rechts von ihm bezeichnet,

- $\Sigma(X) := \begin{bmatrix} \Sigma_1(X_1^1) & \cdots & \Sigma_N(X_N^1) \\ \vdots & \ddots & \vdots \\ \Sigma_1(X_1^M) & \cdots & \Sigma_N(X_N^M) \end{bmatrix} \in \mathbb{R}^{M \times N}$ eine Matrix der an den Stellen

$X := \begin{bmatrix} X_1^1 & \cdots & X_N^1 \\ \vdots & \ddots & \vdots \\ X_1^M & \cdots & X_N^M \end{bmatrix} \in \mathbb{R}^{M \times N}$ evaluierten Signalformen bezeichnet, wobei

♦ eine **n**-te Signalform $\Sigma_n$ als zweimal stetig differenzierbare periodische Funktion $\Sigma_n: \mathbb{R} \to \mathbb{R}$ mit Periode 1 modelliert wird

- ein Vektor $d = \begin{bmatrix} d^1 \\ \vdots \\ d^K \end{bmatrix} := \frac{1}{\Lambda^1} \cdot \begin{bmatrix} D^1 \\ \vdots \\ D^K \end{bmatrix} \in \mathbb{R}^K$ in Vielfachen der Halbwellenlänge $\Lambda^1 \in \mathbb{R}_+$ gemessene

Zieldistanzen $d^1, \cdots, d^K$ enthält,

- ein Vektor $\lambda = \begin{bmatrix} \lambda^1 \\ \vdots \\ \lambda^N \end{bmatrix} := \begin{bmatrix} 1 \\ \Lambda^1/\Lambda^2 \\ \vdots \\ \Lambda^1/\Lambda^N \end{bmatrix} \in \mathbb{R}_+^N$ Reziprokwerte $1 = \lambda^1 < \cdots < \lambda^N$ der in Vielfachen der Halbwellenlänge $\Lambda^1 \in \mathbb{R}_+$ gemessenen Halbwellenlängen der Signale enthält,

- Phasenlagen $y^n$ der Messsignale in einem Vektor $y := \begin{bmatrix} y^1 \\ \vdots \\ y^N \end{bmatrix} \in \left[ -\frac{1}{2}, \frac{1}{2} \right[^N$ zusammengefasst sind,

- ein Vektor $x := \frac{1}{M} \cdot \begin{bmatrix} 0 \\ 1 \\ \vdots \\ M-1 \end{bmatrix} \in [0,1[^M$ die äquitemporalen Abtastzeitpunkte enthält, und

$$\cdot\ W := \begin{bmatrix} w_1^1 & \cdots & w_N^1 \\ \vdots & \ddots & \vdots \\ w_1^M & \cdots & w_N^M \end{bmatrix} \in I\!\!R^{M\times N}$$ eine Matrix der als mittelwertfreie Zufallsvariablen $w_n^m \in I\!\!R$ modellierten Rauschanteile der Distanzsignaldaten $s_n^m$ bezeichnet.

**4.** Distanzmessverfahren nach Anspruch 3,
**dadurch gekennzeichnet, dass**

die Zielamplituden $A \in I\!\!R_+^{K\times N}$ einer der Bedingungen

   • **Rang(A) = 1**
   oder

   $\cdot\ A = A(:,1)\cdot\mathbf{1}_N^T \in I\!\!R_+^{K\times N}$

genügen, wobei **Rang(A)** den Rang und **A(:,1)** $\in I\!\!R^K$ den ersten Spaltenvektor der Matrix **A** bezeichnen.

**5.** Distanzmessverfahren nach einem der vorangehenden Ansprüche,
**dadurch gekennzeichnet, dass**
wenigstens eines der **N** periodischen Signale zwecks Kalibrierung

   • wenigstens einmal, insbesondere zweimal, über eine geräteinterne Referenzstrecke geführt,
   • pro Signalperiode **M** mal äquitemporal abgetastet und
   • zur Bestimmung der Distanzen $D^1,\cdots,D^K$ bzw. $d^1,\cdots,d^K$ verwendet wird.

**6.** Distanzmessverfahren nach Anspruch 5,
**dadurch gekennzeichnet, dass**
das Signalmodell

   • Präkalibriersignaldaten $s_{-n}^m \in I\!\!R$ und

   • Postkalibriersignaldaten $s_{+n}^m \in I\!\!R$

aus den Abtastwerten von zwei zeitlich getrennt ausgeführten Messungen durch die Matrix-Gleichungen

$$S_\pm = \mathbf{1}_M \cdot a_\pm^T + \Sigma(\mathbf{1}_M \cdot [d^0 \cdot \lambda + y - \alpha_\pm \circ \eta]^T + x \cdot \mathbf{1}_N^T)\ +\ W_\pm$$

beschreibt, wobei

   • ein Subskript - die Präkalibriersignaldaten und ein Subskript $_+$ die Postkalibriersignaldaten kennzeichnet,

   • die Kalibriersignaldaten $s_{\pm n}^m \in I\!\!R$ in der Matrix $S_\pm := \begin{bmatrix} s_{\pm 1}^1 & \cdots & s_{\pm N}^1 \\ \vdots & \ddots & \vdots \\ s_{\pm 1}^M & \cdots & s_{\pm N}^M \end{bmatrix} \in I\!\!R^{M\times N}$ zusammengefasst sind,

   • Gleichstromanteile $a_\pm^n \in I\!\!R$ der Kalibriersignaldaten, in einem Vektor $a_\pm := \begin{bmatrix} a_\pm^1 \\ \vdots \\ a_\pm^N \end{bmatrix} \in I\!\!R^N$ zusammengefasst sind,

- $d^0 := \dfrac{D^0}{A^1} \in \mathbb{R}$ eine in Vielfachen der Halbwellenlänge $A^1 \in \mathbb{R}_+$ beschriebene, durch die geräteinterne Referenzstrecke definierte Distanz $D^0 \in \mathbb{R}$ bezeichnet,

- Vektoren $\alpha_\pm \in \mathbb{R}^N$ den beobachtbaren Anteil des Phasendrift-Verhaltens des Empfängers beschreiben,

- ein Vektor $\eta \in \mathbb{R}^N$ den nicht beobachtbaren Anteil des Phasendrift-Verhaltens des Empfängers beschreibt, und

- $W_\pm := \begin{bmatrix} w_{\pm 1}^1 & \cdots & w_{\pm N}^1 \\ \vdots & \ddots & \vdots \\ w_{\pm 1}^M & \cdots & w_{\pm N}^M \end{bmatrix} \in \mathbb{R}^{M \times N}$ die Matrix der als mittelwertfreie Zufallsvariablen $w_{\pm n}^m \in \mathbb{R}$ modellierten Rauschanteile der Kalibriersignaldaten $s_{\mp n}^m$ bezeichnet.

**7.** Distanzmessverfahren nach den Ansprüchen 3 oder 4 und 5 oder 6,
**dadurch gekennzeichnet, dass**

das Signalmodell die Kovarianzmatrizen $C^{(n)}, C_-^{(n)}, C_+^{(n)} \in \mathbb{R}^{M \times M}$ der Zufallsmatrizen $W, W_-, W_+ \in \mathbb{R}^{M \times N}$ als symmetrische positiv definite zirkulante Matrizen modelliert und gemäss

$$C^{(n)} = \mathcal{F}_M^H \cdot [\mathrm{Diag}(\sigma_n)]^2 \cdot \mathcal{F}_M, \quad \sigma_n = \begin{bmatrix} \sigma_n^0 \\ \vdots \\ \sigma_n^{M-1} \end{bmatrix} \in \mathbb{R}_+^M \qquad \sigma_n^m = \sigma_n^{M-m}$$

$$\text{und}$$

$$C_\pm^{(n)} = \mathcal{F}_M^H \cdot [\mathrm{Diag}(\sigma_{\pm n})]^2 \cdot \mathcal{F}_M, \quad \sigma_{\pm n} = \begin{bmatrix} \sigma_{\pm n}^0 \\ \vdots \\ \sigma_{\pm n}^{M-1} \end{bmatrix} \in \mathbb{R}_+^M \qquad \sigma_{\pm n}^m = \sigma_{\pm n}^{M-m}$$

parametrisiert, wobei

$$\mathcal{F}_M \in \mathbb{C}^{M \times M}$$

eine diskrete Fourier-Transformation in $\mathbb{C}^M$, also die Matrix mit den Elementen

$$[\mathcal{F}_M]_{m'}^m := \frac{1}{\sqrt{M}} \cdot e^{-2 \cdot \pi \cdot i \cdot \frac{(m-1) \cdot (m'-1)}{M}} = \frac{1}{\sqrt{M}} \cdot e^{2 \cdot \pi \cdot i \cdot \frac{(m-1) \cdot (M+1-m')}{M}} \in \mathbb{C}, \quad 1 \le m, m' \le M, \text{ bezeichnet.}$$

**8.** Distanzmessverfahren nach Anspruch 7,
**dadurch gekennzeichnet, dass**
Variablen gemäss

$$\cdot [\mathcal{F}_M \cdot S]_n^{1+l} = \sqrt{M} \cdot r_n^l \cdot e^{2 \cdot \pi \cdot i \cdot \varphi_n^l} \text{ mit } r_n^l \in \overline{\mathbb{R}_+} \ \& \ \varphi_n^l \in \left[ -\frac{1}{2}, \frac{1}{2} \right[, \qquad \begin{array}{l} 1 \le l \le L \\ 1 \le n \le N \end{array}$$

$$\cdot \; [\mathcal{F}_M \cdot S_\pm]_n^{1+l} = \sqrt{M} \cdot r_{\pm n}^l \cdot e^{2\cdot\pi\cdot i \cdot \varphi_{\pm n}^l} \; \text{mit} \; r_{\pm n}^l \in \overline{I\!R_+} \; \& \; \varphi_{\pm n}^l \in \left[ -\frac{1}{2}, \frac{1}{2} \right[ , \quad \begin{array}{c} 1 \le l \le L \\ 1 \le n \le N \end{array} ,$$

$\cdot \; \boldsymbol{Q}, \boldsymbol{Q_\pm}, \boldsymbol{Q'} \in$ mit den Elementen

$$Q_n^l := \frac{r_n^l}{\sigma_n^l} \; , \quad Q_{\pm n}^l := \frac{r_{\pm n}^l \cdot \sigma_n^l}{[\sigma_{\pm n}^l]^2} \; , \quad Q_n'^l := \frac{\sigma_n^l \cdot \sqrt{[\sigma_{-n}^l]^2 + [\sigma_{+n}^l]^2}}{\sigma_{-n}^l \cdot \sigma_{+n}^l} \; , \quad \begin{array}{c} 1 \le l \le L \\ 1 \le n \le N \end{array} ,$$

$$\cdot \; \Psi_\pm = \begin{bmatrix} \psi_{\pm 1}^1 & \cdots & \psi_{\pm N}^1 \\ \vdots & \ddots & \vdots \\ \psi_{\pm 1}^L & \cdots & \psi_{\pm N}^L \end{bmatrix} := \begin{bmatrix} \varphi_1^1 & \cdots & \varphi_N^1 \\ \vdots & \ddots & \vdots \\ \varphi_1^L & \cdots & \varphi_N^L \end{bmatrix} - \begin{bmatrix} \varphi_{\pm 1}^1 & \cdots & \varphi_{\pm N}^1 \\ \vdots & \ddots & \vdots \\ \varphi_{\pm 1}^L & \cdots & \varphi_{\pm N}^L \end{bmatrix} \in \; ]{-1},1[^{L \times N} \; ,$$

$$\cdot \; d^- := \frac{D^-}{\Lambda^1} \in I\!R \; \text{ und } \; d^+ := \frac{D^+}{\Lambda^1} \in I\!R \; ,$$

$$\cdot \; \delta := \boldsymbol{d} - \boldsymbol{d}^0 \cdot \mathbf{1}_K \in \; \text{und} \; \begin{bmatrix} \delta^- \\ \delta^+ \end{bmatrix} := \begin{bmatrix} d^- - d^0 \\ d^+ - d^0 \end{bmatrix} \in I\!R^2 \; ,$$

$$\cdot \; \beta := -\alpha_- \div \alpha_+ \in I\!R_+^N \; \text{ und } := \alpha_+ o \eta \in \; ,$$

wobei ein Symbol $\div$ für die elementweise Division der Matrix links von $\div$ durch die gleichdimensionale Matrix rechts von $\div$ steht,
eingeführt werden und

$\cdot$ die Schätzwerte $\hat{\delta}, \hat{\zeta}, \hat{\boldsymbol{A}}$ für unbekannte Zieldistanzen $\delta \in \; [\delta^- \cdot \mathbf{1}_K, \delta^+ \cdot \mathbf{1}_K[$, unbekannten Driftparameter $\in I\!R^N$

und unbekannte Zielamplituden $A \in I\!R_+^{K \times N}$ als Maximalstelle $(\hat{\delta}, \hat{\zeta}, \hat{\boldsymbol{A}})$ einer gemäss

$$\pounds_{K,L}(\delta, \varsigma, A) :=$$

$$\sum_{n=1}^N \sum_{l=1}^L \frac{\left| Q_{-n}^l \cdot e^{2\cdot\pi\cdot i \cdot (\psi_{-n}^l + l \cdot \beta^n \cdot \varsigma^n)} + Q_n^l \cdot A(:,n)^T \cdot e^{2\cdot\pi\cdot i \cdot l \cdot \lambda^n \cdot \delta} + Q_{+n}^l \cdot e^{2\cdot\pi\cdot i \cdot (\psi_{+n}^l - l \cdot \varsigma^n)} \right|^2}{\left| A(:,n)^T \cdot e^{2\cdot\pi\cdot i \cdot l \cdot \lambda^n \cdot \delta} \right|^2 + [Q_n'^l]^2}$$

definierten Funktion $\pounds_{K,L} : I\!R^K \times I\!R^N \times I\!R^{K \times N} \to \overline{I\!R_+}$ in der Menge

$$\boldsymbol{B} := [\delta^- \cdot \mathbf{1}_K, \delta^+ \cdot \mathbf{1}_K[ \times \left[ \frac{-1}{2\cdot} \cdot \mathbf{1}_N \div [\mathbf{1}_N + \beta], \frac{1}{2} \cdot \mathbf{1}_N \div [\mathbf{1}_N + \beta] \right[ \times \overline{I\!R_+^{K \times N}}$$

$$\subset I\!R^K \times I\!R^N \times I\!R^{K \times N}$$

gewählt wird.

**9.** Distanzmessverfahren nach Anspruch 8,
**dadurch gekennzeichnet, dass**

die Maximalstelle $(\hat{\delta}, \hat{\zeta}, \hat{\boldsymbol{A}}) \in \; \boldsymbol{B}$ der Funktion $\pounds_{K,L} : I\!R^K \times I\!R^N \times I\!R^{K \times N} \to \overline{I\!R_+}$ mittels eines lokal konvergie-

renden iterativen Maximierungsverfahrens ζberechnet wird, wobei als Startwert $(\hat{\delta}, \hat{\zeta}, \hat{A}) \in \mathbb{R}^K \times \mathbb{R}^N \times \mathbb{R}^{K \times N}$

insbesondere ein Näherungswert einer Maximalstelle der Funktion $\pounds_{K,K}: \mathbb{R}^K \times \mathbb{R}^N \times \mathbb{R}^{K \times N} \to \overline{\mathbb{R}_+}$ verwendet wird.

**10.** Distanzmessverfahren nach Anspruch 9,
**dadurch gekennzeichnet, dass**

die Maximierung der Funktion $\pounds_{K,K}: \mathbb{R}^K \times \mathbb{R}^N \times \mathbb{R}^{K \times N} \to \overline{\mathbb{R}_+}$ ersetzt wird durch die äquivalente Minimierung der Differenz

$$\pounds_K\left(\left[J_1^T \cdot \frac{E+\breve{E}}{\lambda^1}(:,1), \cdots, J_N^T \cdot \frac{E+\breve{E}}{\lambda^N}(:,N)\right], \breve{\varsigma}, [\breve{A}(:,1), \cdots, J_N^T \cdot \breve{A}(:,N)]\right) - \pounds_K(\delta \cdot \mathbf{1}_N^T, \varsigma, A) \ ,$$

wobei

• die Funktion $\pounds_K: \mathbb{R}^{K \times N} \times \mathbb{R}^N \times \mathbb{R}^{K \times N} \to \overline{\mathbb{R}_+}$ gemäss

$$\pounds_K(\Delta, \varsigma, A) :=$$

$$\sum_{n=1}^{N}\sum_{k=1}^{K} \frac{\left| Q_{-n}^k \cdot e^{2 \cdot \pi \cdot i \cdot (\psi_{-n}^k + k \cdot \beta^n \cdot \varsigma^n)} + Q_n^k \cdot A(:,n)^T \cdot e^{2 \cdot \pi \cdot i \cdot k \cdot \lambda^n \cdot \Delta(:,n)} + Q_{+n}^k \cdot e^{2 \cdot \pi \cdot i \cdot (\psi_{+n}^k - k \cdot \varsigma^n)} \right|^2}{\left| A(:,n)^T \cdot e^{2 \cdot \pi \cdot i \cdot k \cdot \lambda^n \cdot \Delta(:,n)} \right|^2 + [Q_n'^k]^2}$$

definiert ist,
• $J_n \in \{0,1\}^{K \times K}$ eine beliebige $K \times K$-Permutationsmatrix bezeichnet,
• $E \in$ eine beliebige ganzzahlige $K \times N$-Matrix bezeichnet,
• ein

$$\breve{\varsigma} := \begin{bmatrix} \breve{\varsigma}^1 \\ \vdots \\ \breve{\varsigma}^N \end{bmatrix} \in \mathbb{R}^N$$

die betragsmässig kleinsten Maximalstellen $\breve{\varsigma}^n \in \mathbb{R}$ der gemäss

$$\gamma_n(\varsigma^n) := \sum_{k=1}^{K} \frac{Q_{-n}^k \cdot Q_{+n}^k}{[Q_n'^k]^2} \cdot \cos(2 \cdot \pi \cdot [\psi_{+n}^k - \psi_{-n}^k - k \cdot (1+\beta^n) \cdot \varsigma^n]) \ , \qquad \varsigma^n \in \mathbb{R} \ ,$$

definierten Funktionen $\gamma_n: \mathbb{R} \to \mathbb{R}$ enthält, und
• die Matrizen

$$\breve{E} := \begin{bmatrix} \breve{\varepsilon}_1^1 & \cdots & \breve{\varepsilon}_N^1 \\ \vdots & \ddots & \vdots \\ \breve{\varepsilon}_1^K & \cdots & \breve{\varepsilon}_N^K \end{bmatrix} \in \left[ -\frac{1}{2}, \frac{1}{2} \right[^{K \times N}$$

und

$$\breve{A} := \begin{bmatrix} \breve{A}_1^1 & \cdots & \breve{A}_N^1 \\ \vdots & \ddots & \vdots \\ \breve{A}_1^K & \cdots & \breve{A}_N^K \end{bmatrix} \in \overline{I\!\!R_+^{K \times N}}$$

so gewählt werden, dass sie den **K·N** Gleichungen

$$\breve{A}(:,n)^T \cdot e^{2 \cdot \pi \cdot i \cdot k \cdot \breve{E}(:,n)} = \frac{Q_n^k \cdot [Q_n'^k]^2}{Q_{-n}^k \cdot e^{-2 \cdot \pi \cdot i \cdot (\psi_{-n}^k + k \cdot \beta^n \cdot \xi^n)} + Q_{+n}^k \cdot e^{-2 \cdot \pi \cdot i \cdot (\psi_{+n}^k - k \cdot \xi^n)}}, \quad \begin{matrix} 1 \le k \le K \\ 1 \le n \le N \end{matrix}'$$

genügen.

**11.** Distanzmessverfahren nach Anspruch 10,
**dadurch gekennzeichnet, dass**

eine Minimalstelle $\hat{\breve{\delta}} \in$, $\hat{\breve{\zeta}} \in \hat{A}$, $\in I\!\!R^{K \times N}$, $\hat{E} \in \mathbb{Z}^{K \times N}$ und $\hat{J} \in \{0,1\}^{K \cdot N \times K \cdot N}$ der jene Differenz approximierenden quadratischen Funktion

$$\begin{bmatrix} J \cdot [\lambda \otimes \delta] - [E + \breve{E}](:) \\ \varsigma - \breve{\varsigma} \\ J \cdot A(:) - \breve{A}(:) \end{bmatrix}^T \cdot \mathcal{L} \cdot \begin{bmatrix} J \cdot [\lambda \otimes \delta] - [E + \breve{E}](:) \\ \varsigma - \breve{\varsigma} \\ J \cdot A(:) - \breve{A}(:) \end{bmatrix}$$

berechnet und $(\hat{\breve{\delta}}, \hat{\breve{\zeta}}, \hat{A}) \in I\!\!R^K \times I\!\!R^N \times I\!\!R^{K \times N}$ als Startwert für die iterative Maximierung der Funktion $£_{K,L}$ verwendet wird, wobei

• ein Symbol $\otimes$ das *Kroneckerprodukt* der Vektoren bzw. Matrizen links und rechts von ihm bezeichnet,

$$\cdot \quad J := \begin{bmatrix} I_K & \mathbf{0}_{K \times K} & \cdots & \mathbf{0}_{K \times K} \\ \mathbf{0}_{K \times K} & J_2 & & \vdots \\ \vdots & & \ddots & \mathbf{0}_{K \times K} \\ \mathbf{0}_{K \times K} & \cdots & \mathbf{0}_{K \times K} & J_N \end{bmatrix} \in \{0,1\}^{K \cdot N \times K \cdot N}$$ die Blockdiagonalmatrix mit **N** $K \times K$ -Permuta-

tionsmatrizen $J_n \in \{0,1\}^{K \times K}$ in der Diagonalen bezeichnet, wobei

♦ $J_1 := I_K$ als Identitätsmatrix $I_K \in \{0,1\}^{K \times K}$ gewählt wird,

• $A(:) \in I\!\!R^{K \cdot N}$ einen Vektor bezeichnet, der durch Untereinanderschreiben der Spaltenvektoren von $A \in I\!\!R^{K \times N}$ entsteht, und

• eine Matrix $\mathcal{L} \in \mathbb{R}^{(2 \cdot K+1) \cdot N \times (2 \cdot K+1) \cdot N}$ gemäss

$$\mathcal{L} := \begin{bmatrix} \mathcal{L}_{11} & \mathcal{L}_{21}^T \\ \mathcal{L}_{21} & \mathcal{L}_{22} \end{bmatrix} := \frac{-1}{2} \cdot \mathrm{Diag}\left(\begin{bmatrix} \lambda \otimes \mathbf{1}_K \\ \mathbf{1}_{N+K \cdot N} \end{bmatrix}\right)^{-1} \cdot \pounds_K''\left(\breve{E} \div [\mathbf{1}_K \cdot \breve{\lambda}^T], \breve{\varsigma}, \breve{A}\right) \cdot \mathrm{Diag}\left(\begin{bmatrix} \lambda \otimes \mathbf{1}_K \\ \mathbf{1}_{N+K \cdot N} \end{bmatrix}\right)^{-1}$$

definiert ist, mit Submatrizen $\mathcal{L}_{11} \in \mathbb{R}^{K \cdot N \times K \cdot N}$, $\mathcal{L}_{21} \in \mathbb{R}^{(N+K \cdot N) \times K \cdot N}$ und $\mathcal{L}_{22} \in \mathbb{R}^{(N+K \cdot N) \times (N+K \cdot N)}$, wobei

♦ $\mathrm{Diag}\left(\begin{bmatrix} \lambda \otimes \mathbf{1}_K \\ \mathbf{1}_{N+K \cdot N} \end{bmatrix}\right) \in \mathbb{R}^{(2 \cdot K+1) \cdot N \times (2 \cdot K+1) \cdot N}$ eine Diagonalmatrix mit Diagonale

$\begin{bmatrix} \lambda \otimes \mathbf{1}_K \\ \mathbf{1}_{N+K \cdot N} \end{bmatrix} \in \mathbb{R}^{(2 \cdot K+1) \cdot N}$ bezeichnet und

♦ $\pounds_K'' \in \mathbb{R}^{(2 \cdot K+1) \cdot N \times (2 \cdot K+1) \cdot N}$ die *Hessematrix* der zweiten Ableitungen der Funktion

$\pounds_K : \mathbb{R}^{K \times N} \times \mathbb{R}^N \times \mathbb{R}^{K \times N} \to \overline{\mathbb{R}_+}$ bezeichnet.

**12.** Distanzmessverfahren nach Anspruch 11,
**dadurch gekennzeichnet, dass**

• die Halbwellenlängen $\Lambda^1 > \Lambda^2 > \cdots > \Lambda^N > 0$ in rationalen Verhältnissen gewählt werden,

• der Vektor $\lambda \in \mathbb{R}_+^N$ in der Form $\lambda = \dfrac{p}{p^1}$ mit $p := \begin{bmatrix} p^1 \\ \vdots \\ p^N \end{bmatrix} \in \mathbb{N}^N$ und **ggT(*p*)=1** dargestellt wird, wobei

♦ **ggT(*p*)** den grössten gemeinsamen *Teiler* der Komponenten von $p \in \mathbb{N}^N$ bezeichnet,

• eine unimodulare Matrix $P := [P', p] \in \mathbb{Z}^{N \times N}$ mit $P' \in \mathbb{Z}^{N \times (N-1)}$ und letztem Spaltenvektor $p \in \mathbb{N}^N$ gewählt wird, und damit
• eine Variablentransformation

$$\begin{bmatrix} -e' \\ e'' \end{bmatrix} := [Q \otimes I_K] \cdot J^T \cdot E(:) \in \mathbb{Z}^{K \cdot N}, \qquad \begin{array}{l} e' \in \mathbb{Z}^{K \cdot (N-1)} \\ e'' \in \mathbb{Z}^K \end{array}, \quad E \in \mathbb{Z}^{K \times N},$$

in $\mathbb{Z}^{K \cdot N}$ durchgeführt wird, wobei

♦ $Q := P^{-1} \in \mathbb{Z}^{K \cdot N}$ die Inverse der Matrix $P \in \mathbb{Z}^{N \times N}$ bezeichnet, und

• die unimodulare Matrix $P \in \mathbb{Z}^{N \times N}$ so gewählt wird, dass ihre Inverse $Q \in \mathbb{Z}^{N \times N}$ betragsmässig kleine Elemente hat.

**13.** Distanzmessverfahren nach Anspruch 12,
**dadurch gekennzeichnet, dass**

eine Minimalstelle $\hat{e}' \in \mathbb{Z}^{K \cdot (N-1)}$, $\hat{J} \in \{0,1\}^{K \cdot N \times K \cdot N}$ des Vektornorm-Quadrates

$$\left\| \boldsymbol{P}^{\perp}_{\boldsymbol{G}(\boldsymbol{J})} \cdot \boldsymbol{R} \cdot \left[ \boldsymbol{J} \cdot [P' \otimes \boldsymbol{I}_K] \cdot e' - \breve{E}(:) \right] \right\|_2^2 \quad \text{für} \quad e' \in \mathbb{Z}^{K \cdot (N-1)} \quad \text{und} \quad \boldsymbol{J} \in \{0,1\}^{K \cdot N \times K \cdot N}$$

berechnet wird, wobei

- $\left\| \cdot \right\|_2^2$ das Quadrat der Euklidischen Vektornorm $\left\| \cdot \right\|_2$ bezeichnet,

- $\boldsymbol{R} \in \mathbb{R}^{K \cdot N \times K \cdot N}$ einen Rechts-Choleskyfaktor der Matrix

$$\mathcal{L}_{11} - \mathcal{L}_{21}^T \cdot \mathcal{L}_{22}^{-1} \cdot \mathcal{L}_{21} \in \mathbb{R}^{K \cdot N \times K \cdot N}$$

bezeichnet, und

- $\boldsymbol{P}^{\perp}_{\boldsymbol{G}(\boldsymbol{J})} \in \mathbb{R}^{K \cdot N \times K \cdot N}$ die Normalprojektion des $\mathbb{R}^{K \cdot N}$ auf seinen von den Spaltenvektoren der Matrix

$$\boldsymbol{G}(\boldsymbol{J}) := \boldsymbol{R} \cdot \boldsymbol{J} \cdot [\lambda \otimes \boldsymbol{I}_K] \in \mathbb{R}^{K \cdot N \times K} \quad \text{aufgespannten Unterraum bezeichnet,}$$

und aus $\hat{e}' \in \mathbb{Z}^{K \cdot (N-1)}$ und $\hat{J} \in \{0,1\}^{K \times K \cdot N}$ durch Variabeln-Rücktransformation

$$\hat{E}(:) = \boldsymbol{J} \cdot [P \otimes \boldsymbol{I}_K] \cdot \begin{bmatrix} -\hat{e}' \\ e'' \end{bmatrix} \in \mathbb{Z}^{K \cdot N} ,$$

$e'' \in \mathbb{Z}^K$ beliebig, berechnat wird.

**14.** Distanzmessverfahren nach Anspruch 11,
**dadurch gekennzeichnet, dass**
eine Minimierung des Vektornorm-Quadrates

$$\left\| \boldsymbol{P}^{\perp}_{\boldsymbol{G}(\boldsymbol{J})} \cdot \boldsymbol{R} \cdot [E + \breve{E}](:) \right\|_2^2$$

für $E \in \mathbb{Z}^{K \times N}$ und $\boldsymbol{J} \in \{0,1\}^{K \times K \cdot N}$, gemäss den Ansprüchen 12 und 13 erfolgt.

**15.** Distanzmessverfahren nach einem der Ansprüche 8 bis 14,
**dadurch gekennzeichnet, dass**
der Schätzwert $\hat{\delta} \in \mathbb{R}^K$ gemäss

$$\hat{\delta} = p_1 \cdot \left\{ \sum_{n=1}^{N} q^n \cdot \hat{J}_n^T \cdot \breve{E}(:,n) + e'' \right\} ,$$

mit $e'' \in \mathbf{Z}^K$ beliebig, berechnet wird, wobei $q := \begin{bmatrix} q^1 \\ \vdots \\ q^N \end{bmatrix} \in \mathbf{Z}^N$ dergestalt gewählt wird, dass $q^T \cdot p = 1$ gilt.

16. Computerprogrammprodukt mit Programmcode, der auf einem maschinenlesbaren Träger gesjpeichert oder durch eine lektromagnetische Welle verkörpert ist, zur Durchführung des Verfahrens nach einem der Ansprüche 1 bis 15, insbesondere wenn das Programm in einem Computer ausgeführt wird.

**Europäisches Patentamt**

# EUROPÄISCHER RECHERCHENBERICHT

Nummer der Anmeldung

EP 05 10 7764

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | EP 1 450 128 A (LEICA GEOSYSTEMS AG) 25. August 2004 (2004-08-25) * das ganze Dokument * ----- | 1 | G01S17/36 G01S17/00 |
| A | DE 103 48 104 B3 (LEUZE ELECTRONIC GMBH + CO KG) 23. Dezember 2004 (2004-12-23) * Zusammenfassung * * Absätze [0034], [0045], [0046], [0051] * ----- | 1 | |
| A | MUSCH T ET AL: "A multiple target high precision laser range measurement system based on the FMCW concept" MICROWAVE CONFERENCE, 2003. 33RD EUROPEAN 7-9 OCT. 2003, PISCATAWAY, NJ, USA,IEEE, Bd. 3, 7. Oktober 2003 (2003-10-07), Seiten 991-994, XP010680818 ISBN: 1-58053-835-5 * das ganze Dokument * ----- | 1 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| Den Haag | 12. Januar 2006 | Roost, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 
& : Mitglied der gleichen Patentfamilie, übereinstimmendes Dokument

EPO FORM 1503 03.82 (P04C03)

**EP 1 757 956 A1**

**ANHANG ZUM EUROPÄISCHEN RECHERCHENBERICHT**
**ÜBER DIE EUROPÄISCHE PATENTANMELDUNG NR.**

EP 05 10 7764

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2006

| Im Recherchenbericht angeführtes Patentdokument | | Datum der Veröffentlichung | Mitglied(er) der Patentfamilie | | Datum der Veröffentlichung |
|---|---|---|---|---|---|
| EP 1450128 | A | 25-08-2004 | AU | 2004213528 A1 | 02-09-2004 |
| | | | CA | 2516478 A1 | 02-09-2004 |
| | | | WO | 2004074773 A1 | 02-09-2004 |
| DE 10348104 | B3 | 23-12-2004 | EP | 1524534 A1 | 20-04-2005 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004074773 A
- EP 1450128 A

**In der Beschreibung aufgeführte Nicht-Patentliteratur**

- **J. M. RÜEGER.** Electronic Distance Measurement. Springer, 1996
- **R. JOECKEL ; M. STOBER.** Elektronische Entfernungs- und Richtungsmessung. Verlag Konrad Wittwer, 1999
- **G. H. GOLUB ; C. F. VAN LOAN.** Matrix Computations. The Johns Hopkins University Press, 1996
- **G. W. STEWART ; J-G. SUN.** Matrix Perturbation Theory. Academic Press, Inc, 1990
- **A. STUART ; J. K. ORD ; S. ARNOLD.** Kendalls's Advanced Theory of Statistics. Arnold, 1999, vol. 2A
- **C. CARATHÉODORY.** Über den Variabilitätsbereich der Fourierschen Konstanten von positiven harmonischen Funktionen. *Rend. Circ. Mat. Palermo,* 1911, vol. 32, 193-217
- **U. GRENANDER ; G. SZEGÖ.** Toeplitz Forms and their Applications. University of alifornia Press, 1958
- GPS for Geodesy. Springer, 1998
- The LAMBDA Method for Integer Ambiguity Estimation: Implementation Aspects. **P. DE JONGE ; C. TIBERIUS.** LGR-Series. Publications of the Delft Geodetic Computing Centre, Januar 1996
- **G. HAVAS ; B.S. MAJEWSKI ; K.R. MATTHEWS.** Extended GCD and Hermite Normal Form Algorithms via Lattice Basis Reduction. *Experimental Mathematics,* 1998, vol. 7 (2), 125-136
- **G. HAVAS ; B.S. MAJEWSKI ; K.R. MATTHEWS.** Extended GCD and Hermite Normal Form Algorithms via Lattice Basis Reduction (addenda and errata. *Experimental Mathematics,* 1999, vol. 8 (2), 205